# EUROPÄISCHE PATENTSCHRIFT

(11) **EP 0 894 303 B1**
(45) Veröffentlichungstag und Bekanntmachung des Hinweises auf die Patenterteilung: **17.11.1999**
(21) Anmeldenummer: 97921611.6
(22) Anmeldetag: 15.04.1997
(51) Int. Cl.: G06F 9/46

(54) **VERFAHREN ZUR KOORDINATION DES ABLAUFS VON MITEINANDER KOOPERIERENDEN PROZESSEN, DIE AUF EIN GEMEINSAMES OBJEKT ZUGREIFEN**
PROCESS FOR CO-ORDINATING THE COURSE OF CO-OPERATING PROCESSES ACCESSING A COMMON OBJECT
PROCEDE POUR LA COORDINATION DU DEROULEMENT DE PROCESSUS COOPERANT MUTUELLEMENT ET AYANT ACCES A UN OBJET COMMUN

(30) Priorität: 15.04.1996 DE 19614840
(43) Veröffentlichungstag der Anmeldung: 03.02.1999
(73) Patentinhaber: SIEMENS AKTIENGESELLSCHAFT, 80333 München (DE)
(72) Erfinder: KNOPP, Jürgen, D-85579 Neubiberg (DE); REICH, Matthias, D-81737 München (DE)
(86) Internationale Anmeldenummer: DE9700753
(87) Internationale Veröffentlichungsnummer: WO9739405

(56) Entgegenhaltungen:
- IEEE TRANSACTIONS ON PARALLEL AND DISTRIBUTED SYSTEMS, Bd. 4, Nr. 7, 1.Juli 1993, Seiten 795-811, XP000397943 NARAIN H GENANI: "CAPSULES: A SHARED MEMORY ACCESS MECHANISM FOR CONCURRENT C/C++"
- PARALLEL PROCESSING: CONPAR 94 - VAPP VI. THIRD JOINT INTERNATIONAL CONFERENCE ON VECTOR AND PARALLEL PROCESSING PROCEEDINGS, PROCEEDINGS OF INTERNATIONAL CONFERENCE ON PARALLEL PROCESSING: CONPAR '94 - VAPP VI, LINZ, AUSTRIA, 6-8 SEPT. 1994, 1994, BERLIN, GERMANY, SPRINGER-VERLAG, GERMANY, Seiten 449-460, XP002036843 LUPKE S: "Accelerated access to shared distributed arrays on distributed memory systems by access objects"
- 8TH ANNUAL ACM CONFERENCE ON OBJECT-ORIENTED PROGRAMMING SYSTEMS, LANGUAGES, AND APPLICATIONS, OOPSLA 1993, WASHINGTON, DC, USA, 26 SEPT.-1 OCT. 1993, Bd. 28, Nr. 10, ISSN 0362-1340, SIGPLAN NOTICES, OCT. 1993, USA, Seiten 162-177, XP000411724 BAL H E ET AL: "Object distribution in Orca using compile-time and run-time techniques"
- PROCEEDINGS. FIRST INTERNATIONAL WORKSHOP ON HIGH-LEVEL PROGRAMMING MODELS AND SUPPORTIVE ENVIRONMENTS, PROCEEDINGS FIRST INTERNATIONAL WORKSHOP ON HIGH-LEVEL PROGRAMMING MODELS AND SUPPORTIVE ENVIRONMENTS, HONOLULU, HI, USA, 16 APRIL 1996, ISBN 0-8186-7567-5, 1996, LOS ALAMITOS, CA, USA, IEEE COMPUT. SOC. PRESS, USA, Seiten 34-40, XP002036845 KNOPP J ET AL: "A data model for architecture independent parallel programming"

## Beschreibung

Explizite Parallelprogrammierung ist dadurch gekennzeichnet, daß der Programmierer spezifizieren muß, wie mehrere kooperierende Prozesse ihren Ablauf koordinieren. Je nach genutzter Rechnerarchitektur geschieht diese Koordination durch:
- Synchronisation im Falle von Prozessen mit gemeinsamem Adreßraum. Synchronisation verhindert, daß zum falschen Zeitpunkt auf gemeinsame Daten zugegriffen wird.
- Kommunikation zwischen Prozessen mit verteiltem Adreßraum. Kommunikation macht Daten zwischen solchen Prozessen (zum richtigen Zeitpunkt) verfügbar.

Um die Vorteile dieser beiden Rechnerarchitekturen zu nutzen, wird in parallelen Programmiermodellen und parallelen Programmiersprachen entweder Kommunikation (für verteilte Architekturen) oder Synchronisation (für Architekturen mit gemeinsamen Adreßraum) als Programmiermittel angeboten.

Die Unterstützung von sogenanntem verteiltem gemeinsamen Speicher ist aus [NiLo] bekannt und geht von der Fiktion aus, daß auf nicht zugänglichen Speicher zugegriffen werden kann (es geschieht dann automatische Datenmigration). Es gibt neben diesem allgemeinen Betriebssystemansatz eine große Anzahl von Programmiermodellen für verteilte Speicher, die diesen Gedanken verfeinern. Z. B. Emerald[BHJLC] unterscheidet zwischen Lesen und Schreiben. Objekte werden bei lesenden oder schreibenden Zugriffen gemäß einer naheliegenden Semantik auf die Maschine migriert, die sie benötigt. Alle diese Ansätze sind nicht für gemeinsamen Speicher gedacht. Ein Überblick über diese und ähnliche Modelle bzw. Sprachen ist in [BaStTa] zu finden.

Die der Erfindung zugrunde liegende Aufgabe besteht darin, ein Verfahren anzugeben, das ein einheitliches Programmiermodell für beide Architekturen ermöglicht. Diese Aufgabe wird gemäß den Merkmalen des Patentanspruches 1 gelöst.

Das Verfahren kann mit Hilfe sogenannter Koordinatorobjekte explizite Koordinationsbefehle durch eine statische Deklaration von zulässigen Abfolgen von Zugriffen ersetzen, wodurch das dynamische Ablaufverhalten der kooperierenden Prozesse beeinflußt werden kann. Dieser Ansatz der Parallelprogrammierung führt zu mehr Komfort und Portabilität als bei konventioneller Parallelprogrammierung, ohne daß dadurch die Effizienz beeinträchtigt wird. Koordinatorobjekte sind also passive Objekte, auf denen die aktiven Prozesse operieren.

Im folgenden werden gleiche Zugriffe mit dem Begriff Zugriffsart bezeichnet. Z. B. gehören schreibende Zugriff zu einer Zugriffsart, lesende Zugriffe zu einer anderen Zugriffsart.

Die grundlegende Idee der Koordinatorobjekte ist dabei folgende:
Parallelprogrammierer geben Zugriffsmuster für gemeinsam benutzte Objekte (Daten) an. Ein Zugriffsmuster beschreibt, welche Abfolgen von Zugriffen der kooperierenden Prozesse auf ein gemeinsames Objekt möglich sind. Dies soll an Hand von schreibenden und lesenden Zugriffen zu einem gemeinsamen Objekt erläutert werden. In diesem Fall kann zwischen schreibenden und lesenden Zugriffen unterschieden werden und spezifiziert werden, nach welchen schreibenden Zugriffen Objekte bereit sind, gelesen zu werden. Umgekehrt kann auch angegeben werden, nach welchen lesenden Zugriffen Objekte wieder bereit sind, geschrieben zu werden. Die Muster können im Allgemeinen durch Zähler definiert werden, die entweder die Zugriffe aller Prozesse gemeinsam oder die Zugriffe jedes einzelnen Prozesses protokollieren.

Entsprechend den angebenden Zugriffsmustern entsteht ein Programmverhalten, das implizit (ausgelöst durch bestimmte Zugriffsfolgen) zu Synchronisation oder Kommunikation führt. Z. B. werden im Lesezustand schreibende Operationen verzögert (d.h. die entsprechenden Prozesse werden schlafen gelegt). Bei Umschalten in den Schreibzustand werden die schlafenden Prozesse aufgeweckt, sie verhalten sich dann genauso, als hätten sie ihren Zugriff noch nicht versucht. Im Schreibzustand ist das Verhalten gegengleich. Dieser Ablauf findet in der Regel iterativ statt, d.h. der schreibende und der lesende Zustand wechseln sich wiederholt ab.

Die wesentliche Idee der Koordinatorobjekte ist somit, daß durch a priori angegebene Eigenschaften von Objekten ein Laufzeitverhalten erreicht wird, das durch automatische Synchronisation oder Kommunikation gekennzeichnet ist. Zugriffe auf Koordinatorobjekte verändern das normale Programmverhalten insoweit, daß Speicherzugriffe verzögert werden können - oder anders ausgedrückt: Entsprechend den spezifizierten Zugriffsmustern werden Prozesse bei Zugriffen auf Koordinatorobjekte blockiert und zu einem geeigneten Zeitpunkt wieder zum Leben erweckt.

Weiterbildungen der Erfindung ergeben sich aus den abhängigen Ansprüchen.

An Hand von Ausführungsbeispielen wird die Erfindung weiter erläutert. Es zeigen
- Figur 1: eine Prinzipdarstellung der Koordination von Prozessen;
- Figur 2 und 3: eine Prinzipdarstellung der Arbeitsweise der Koordinatorobjekte, wenn mehrere Prozesse auf ein gemeinsames Objekt zugreifen;
- Figur 4-8: Beispiele für Zugriffsmuster und deren Implementierung im Koordinatorobjekt.

### 1. Das zugrundeliegende Speichermodell

Bei der Erläuterung der Koordinatorobjekte wird von einem Speichermodell mit den folgenden Eigenschaften ausgegangen: Jeder Prozeß besitzt einen lokalen Speicher.
- Zugriffe auf diesen Speicher durch fremde Prozesse sind im Fall eines gemeinsamen Adreßraums zwar möglich, die Zugriffe verschiedener Prozesse sind jedoch unkoordiniert (d.h. unsynchronisiert), sofern nicht explizit synchronisiert wird.
- Im Fall eines verteilten Adreßraums sind direkte Speicherzugriffe durch fremde Prozesse überhaupt nicht möglich.

Im Sinne eines einheitlichen Programmiermodells wird daher davon ausgegangen, daß lokale Speicherzugriffe ausschließlich prozeßlokale Daten betreffen, d.h. daß keine Kommunikation bzw. Datenaustausch zwischen Prozessen über lokale Speicherzugriffe realisiert wird.

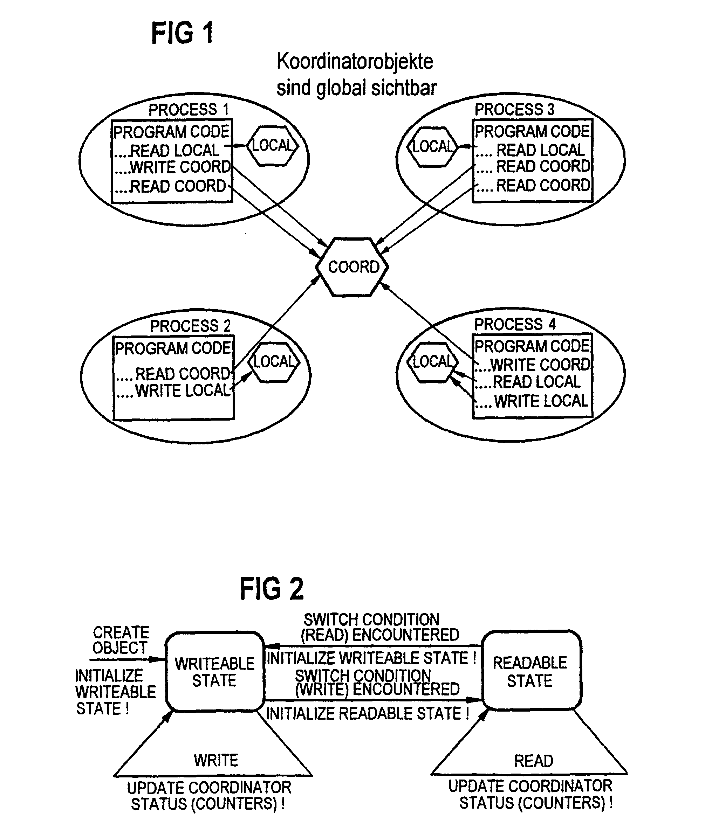

Koordinatorobjekte stellen die einzige Ausnahme dar. Durch sie werden dem Programmierer **globale Objekte** zur Verfügung gestellt, die für jeden involvierten Prozeß sichtbar sind. Darüber hinaus wird eine **Koordination sämtlicher Zugriffe** auf diese globalen Objekte erzwungen. Sowohl lokale als auch globale Objekte können sowohl gelesen als auch geschrieben werden. Das Speichermodell wird durch Figur 1 veranschaulicht. Die vier Prozesse 1-4 können auf das gemeinsame Koordinatorobjekt coord zugreifen. Jeder Prozeß hat seinen lokalen Speicher local. Es ist ersichtlich, daß die Prozesse auf ihren lokalen Speicher zugreifen können, jedoch nur über Koordinatorobjekte mit anderen Prozessen kooperieren können.

Während lesende und schreibende Zugriffe auf lokale Objekte in konventioneller Weise stattfinden, existiert für die Koordinatorobjekte ein besonderes Zugriffsmodell, welches im folgenden Abschnitt zunächst beispielhaft erläutert wird.

### 2. Einführende Beschreibung des Koordinatorobjekt-Zugriffsmodells

- Koordinatorobjekte befinden sich abwechselnd in zwei unterschiedlichen Zuständen: dem Schreibzustand (*writeable*) und dem Lesezustand (*readable*). Bei Erzeugung der Koordinatorobjekte sind diese im Schreibzustand.
- Lesezugriffe blockieren im Schreibzustand und Schreibzugriffe blockieren im Lesezustand. Dabei bedeutet blockieren, daß der entsprechende Prozeß verdrängt wird (schlafen gelegt wird), und zwar mindestens bis zu dem Zeitpunkt des Umschaltens in den entgegengesetzten Zustand.

Das Diagramm (Transitionsnetz) nach Figur 2 veranschaulicht dieses Verhalten. Dabei wird folgende Notation verwendet:

Oberhalb der Kanten des Transitionsnetzes werden **Ereignisse** (Event)oder *logische Bedingungen* notiert. Die Beschriftung unterhalb der Kanten drückt Aktionen aus, die beim Durchwandern der entsprechenden Kante ausgeführt werden sollen. Es gilt folgendes Verhalten:
- Schreibzugriffe auf ein Koordinatorobjekt, das sich im Lesezustand befindet, werden (mindestens) solange verzögert (durch Blockierung des schreibenden Prozesses), bis das Koordinatorobjekt wieder in den Schreibzustand übergeht. Analog werden lesende Prozesse verzögert, wenn sich das Koordinatorobjekt im Schreibzustand befindet. Aus diesem Grund treten im Transitionsnetz keine Kanten für Lesezugriffe im Schreibzustand oder für Schreibzugriffe im Lesezustand auf.
- Blockierte schreibende Prozesse werden aufgeweckt, wenn der Schreibzustand wieder erreicht wird, und blockierte lesende Prozesse werden aufgeweckt, wenn der Lesezustand erreicht wird. Sie versuchen dann erneut, ihren Zugriff durchzuführen. Dabei kann prinzipiell wieder eine Blockierung entstehen (falls durch Aktionen eines anderen Prozesses der Zustand bereits erneut gewechselt hat). Dann verhalten sich die Prozesse wieder wie oben beschrieben.
- Das Umschalten zwischen den beiden Zuständen wird durch das Eintreten von Schaltbedingungen ausgelöst. Schaltbedingungen werden definiert durch die Spezifikation von Zugriffsmustern und die bisherige Abfolge von Zugriffen bezüglich dieses Zugriffsverhaltens. Das Zugriffsmuster wird für jedes Koordinatorobjekt statisch durch den Benutzer (Programmierer) spezifiziert. Das Spezifikationsschema ist definiert durch Antworten auf die folgenden Fragen:
   ⇒ Welche Prozesse schreiben ein Koordinatorobjekt wie oft, bevor es zum Lesen freigegeben wird?
   ⇒ Welche Prozesse lesen ein Koordinatorobjekt wie oft, bevor es zum Schreiben freigegeben wird?
- Für jede Zugriffsart (Schreiben oder Lesen) werden deshalb Zugriffsmuster definiert; so bedeutet z.B. ein Schreib-Zugriffsmuster 'write (each(*wGroup,*2))', daß das Koordinatorobjekt zum Lesen freigegeben wird, sobald jeder Prozeß der durch *wGroup* definierten Gruppe von Prozessen (Prozeßgruppe) das Koordinatorobjekt genau zweimal geschrieben hat. Das Lese-Zugriffsmuster 'read(arbitrary(5))' bedeutet, daß der Lesezustand verlassen wird, sobald genau fünf Lesezugriffe beliebiger Prozesse auf das Koordinatorobjekt stattgefunden haben. Hierbei darf der gleiche Prozeß auch mehrfach zugreifen. Es gibt noch weitere Zugriffsmuster (siehe unten).
- Die Zugriffsmuster definieren jeweils eine Schreib- bzw. Lesephase. Diese Phasen können sich beliebig oft abwechseln (sobald die Schaltbedingungen gelten). Anfangs befinden sich Koordinatorobjekte immer im Schreibzustand, d.h. die erste Phase ist immer eine Schreibphase.
- Ein voller Zyklus, bestehend aus einer Schreib- und einer Lesephase mit abschließendem erneutem Übergang in den Schreibzustand, wird im folgenden Berechnungsschritt genannt. Damit definiert ein Paar von Zugriffsmustern, z.B. *'*(write(each (*wGroup,*2))*,*read(arbitrary(5)))*',* den Ablauf eines Berechnungsschritts durch Angabe der Schaltbedingungen für Schreib- und Lesephase.

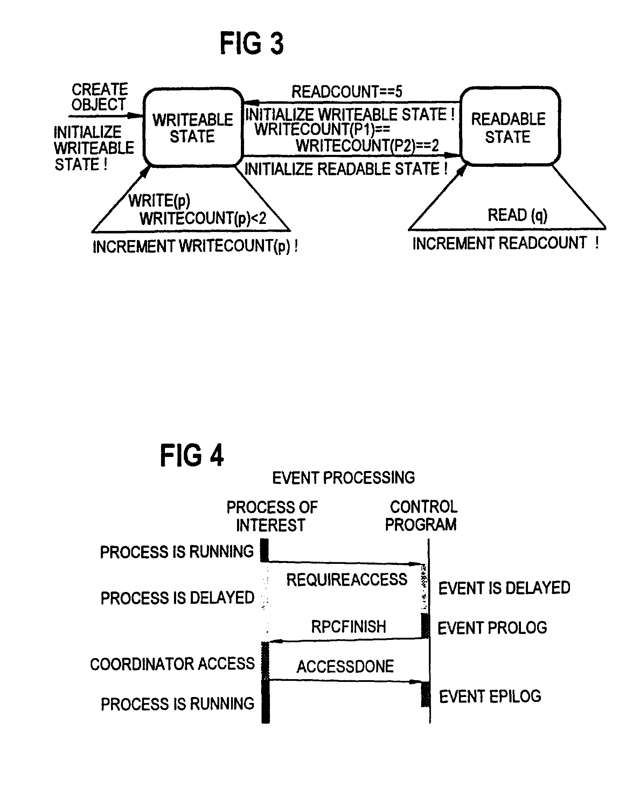

Das erwähnte Zugriffsmuster
⇒ **(write(each(*wGroup,*2))*,* read(arbitrary(5)))** kann anhand eines verfeinerten Transitionsnetzes (Figur 3) veranschaulicht werden. Dafür nehmen wir an, daß die Prozeßgruppe *wGroup* aus zwei Prozessen *p*_{*1*} und *p*_{*2*} besteht mit *p* ∈ { *p*_{*1*} *, p*_{*2*} *}* und daß Leseprozesse *q* ∈ { *q*_{*1*}*, ..., q*_{*n*} } existieren.

Notation (Figur 3): Die Schreibweise **Zugriff** | *Bedingung* besagt, daß die Kante bei dem entsprechenden **Zugriff** nur dann durchlaufen wird, wenn zuvor die *Bedingung* erfüllt ist.
- Bei dem Zugriffsmuster für Schreibzugriffe wird die Schaltbedingung durch Angabe des Schlüsselwortes 'each' als Bedingung spezifiziert, die für jeden einzelnen der beteiligten Prozesse gelten muß.
- Ist in diesem Fall die Schaltbedingung z.B. für den Prozeß *p* bereits erfüllt (*writecount*(*p*) == 2), so werden, obwohl sich das Koordinatorobjekt im Schreibzustand befindet, weitere Schreibzugriffe dieses Prozesses ebenfalls verzögert. Da ein solcher Schreibzugriff frühestens in der nächsten Schreibphase ausgeführt werden kann, wird Prozeß *p* auch erst zu Beginn dieser Phase wieder aufgeweckt. (Hieraus ergibt sich, daß es im obigen Transitionsnetz keine Kante für den Fall **write(p)** | *writecount(p) == 2* gibt!).
- Bei dem Zugriffsmuster für Lesezugriffe bedeutet das Schlüsselwort 'arbitrary', daß weder die Zahl der zugreifenden Prozesse noch der Beitrag jedes einzelnen Prozesses zur Erfüllung der Schaltbedingung festgelegt ist, sondern nur die Gesamtzahl der Zugriffe.
- Die Initialisierung eines Zustands beinhaltet unter anderem, daß die Zähler *'writecount(p)' -* je ein Zähler pro Prozeß für den Schreibzustand-, bzw. *'readcount' -* ein gemeinsamer Zähler für den Lesezustand-, auf *0* gesetzt werden.

Die obigen Transitionsnetze sind unvollständig: Es wird nicht spezifiziert, was geschieht, wenn Bedingungen nicht gelten oder Zugriffe "im falschen Zustand" geschehen. Hierauf wird später noch eingegangen.

### 3. Zugriffsmuster

Zugriffsmuster ermöglichen dem Programmierer, die Interaktionen zwischen Prozessen auf einer Ebene auszudrücken, die sehr nahe am Verhalten des (abstrakten) Algorithmus ist. Die Zugriffsmuster werden getrennt für die beiden Zugriffsarten Schreiben und Lesen beschrieben; es stehen jeweils die folgenden Zugriffsmuster zur Verfügung:
each(*processGroup, numberOfAccesses*)
each(**processGroup**)
arbitrary(**numberOfAccesses**)
arbitrary()

Wie bereits erwähnt, muß die Zustands-Schaltbedingung bei einem 'each' Muster von jedem einzelnen Prozeß aus der Prozeßgruppe *processGroup* erfüllt werden. Eine Prozeßgruppe ist dabei eine Menge von Prozessen, die spätestens zum Initialisierungszeitpunkt des Koordinatorobjekts bekannt sein muß, und deren Zusammensetzung sich nach diesem Zeitpunkt nicht mehr ändern darf. Die konkrete Ausgestaltung eines entsprechenden Datentyps bleibt der jeweiligen Implementierung überlassen.

Zugriffe von Prozessen, die nicht der Prozeßgruppe angehören, sind nicht erlaubt.

Bei einem 'arbitrary' Muster ist die Menge der zugriffsberechtigten Prozesse nicht eingeschränkt, sie muß daher auch nicht angegeben werden.

Enthält ein Zugriffsmuster eine *'numberOfAccesses'* Angabe (ein *integer* Datentyp), so ist die Schaltbedingung erfüllt, wenn die angegebene Anzahl von Zugriffen durchgeführt wurde - bei einem 'each' Muster von jedem Prozeß der angegebenen Gruppe, bei einem 'arbitrary' Muster zählt die Summe der Zugriffe aller Prozesse.

Wird hingegen keine Zugriffszahl angegeben, so müssen die Schaltbedingungen von den Prozessen selbst ermittelt werden. Die Schaltbedingung für eine durch 'each(*processGroup*)' spezifizierten Zugriffsphase *phase* ist erfüllt, wenn jeder Prozeß der Gruppe genau eine 'procReadyWith(phase) ' Anweisung ausgeführt hat. Bei einer 'arbitrary() ' Spezifikation wird die Schaltbedingung durch genau eine 'switchFrom(*phase*)' Anweisungen eines beliebigen Prozesses hergestellt.

### 3.1 Unterschiedliche Zugriffsmuster

Koordinatorobjekte beschreiben durch ihre Zugriffsmuster unterschiedliche Varianten von Schreiber-Leser (Erzeuger-Verbraucher) Szenerien. Im folgenden werden einige dieser Varianten beschrieben.

Die hier verwendete Syntax einer Koordinatorobjektdeklaration **coordinator...** wurde mit dem Ziel der Lesbarkeit gewählt, alternative Syntaxen sind natürlich denkbar. Durch die folgenden Zugriffsmuster für die Koordinatorobjekt-Variable *'object'* vom Typ *'someType'* wird jeweils ein spezielles paralleles (Zugriffs-)Verhalten erzwungen:
**coordinator *<someType> object* (write(arbitrary(1)),**
**read(arbitrary(1)));**

Die Variable *'object'* wird im Wechsel je einmal geschrieben und gelesen. Dieses Verhalten kann z.B. zum Weiterreichen von Zugriffsrechten auf exklusive Betriebsmittel verwendet werden.
coordinator *<someType> object* (write(each(*group1*,1)), read(each(**group2,**2)));

Die Prozesse aus der Gruppe *'group1'* schreiben die Variable *'object'* gemeinschaftlich. Wenn jeder Prozeß seinen Beitrag geleistet hat, wird die Variable von allen Prozessen der Gruppe *'group2'* (diese ist häufig identisch mit *group1)* genau zweimal gelesen, bevor sie wieder zum Schreiben freigegeben wird. Die Variable *'object'* ist bei einem solchen Zugriffsmuster typischerweise eine strukturierte Größe, etwa ein Vektor, der durch die Prozesse in SPMD (single program multiple data) Manier bearbeitet wird.
**coordinator *<someType> object* (write(each(*group1*,1)), read(each(*group2*)));**

Hier wird genauso geschrieben wie oben, jedoch steht nicht fest, wieviel mal jeder beteiligte Prozeß liest. Es wird erst wieder geschrieben, nachdem jeder Prozeß aus *group2* die Anweisung 'procReadyWith(read)' ausgeführt hat, um zu signalisieren, daß er seine Lesephase beendet hat. Eine derartige Koordination der Leseprozesse ist z.B. angebracht, wenn die Leseprozesse verschiedenartige Berechnungen mit *'object'* durchführen.
**coordinator <someType> object (write(arbitrary()),**
**read(each(*group2*)));**

Hier wird genauso gelesen wie oben. Beim Schreiben findet keine Festlegung auf irgendeinen Prozeß oder eine Prozeßgruppe statt, auch wird keine bestimmte Anzahl von Zugriffen verlangt. Es wird erst gelesen, wenn irgendein Prozeß die Anweisung 'switchFrom(write)' ausführt. Ein derartiges Schreibmuster kann verwendet werden, wenn ein Hauptprozeß die Arbeit einer variablen Anzahl von (schreibenden) Prozessen überwacht, welche unterschiedliche Anteile der Gesamtberechnung und damit unterschiedlich viele Schreibzugriffe durchführen.
**coordinator <*someType*> object (write(...),**
**read(arbitrary(4711)));**

Hier wird erst wieder geschrieben, wenn 4711 mal gelesen wurde.

### 4. Konfliktfreiheit

Koordinatorobjekte koordinieren nicht nur schreibende und lesende Operationen gegeneinander, sondern verhindern grundsätzlich gleichzeitige Zugriffe auf dasselbe Objekt. Wenn mehr als zwei schreibende Zugriffe anstehen, werden sie strikt hintereinander ausgeführt und nicht verwoben. Dadurch werden inkonsistente Zustände vermieden, die durch diese Verwobenheit entstehen könnten. Wir gehen also immer von atomaren Zugriffen auf Koordinatorobjekte aus.

Diese Eigenschaft ermöglicht sicheres paralleles Programmieren. Andererseits kann für gewisse Zugriffe Atomizität zu streng sein: Durch die Sequentialisierung entsteht Ineffizienz, die vermeidbar ist, wenn man weiß, daß in Wirklichkeit gar keine Konflikte entstehen können. So sind im Allgemeinen (nicht immer!) lesende Zugriffe konfliktfrei. Auch schreibende Zugriffe können konfliktfrei sein, wenn auf unterschiedlichen Teilen strukturierter Objekte geschrieben wird.

Benutzer von Koordinatorobjekten können Konfliktfreiheit dem System mitteilen. Für Schreibzugriffe geschieht dies durch Spezifikation von 'nonconflictWrite(...)' anstelle von 'write(...)'. Für Lesezugriffe wird standardmäßig Konfliktfreiheit angenommen, so daß der Benutzer 'exclusiveRead(...)' anstelle von 'read(...)' spezifizieren muß, um Atomizität der Lesezugriffe zu erhalten. Im Anhang ist ein Programmbeispiel mit solchen Spezifikationen angegeben.

### 5. Programmiersprachenanbindung

Koordinatorobjekte lassen sich in jede Sprache integrieren, die in dieser Beschreibung benutzte Sprache ist C++. Es ist jedoch wesentlich, daß lesende Zugriffe von schreibenden unterschieden werden können. Auf welche Weise dies geschieht, ist hier unwichtig. Z.B. können für vordefinierte Funktionen auf Standardtypen die Zugriffsarten vordefiniert werden; für Benutzer-definierte Funktionen und Typen kann eine spezielle Benutzerdeklaration eine Unterscheidung von schreibenden und lesenden Operationen ermöglichen. Ein Beispiel einer möglichen Syntax für solche Spezifikationen sei für die im nachfolgenden Programmierbeispiel verwendete Koordinatorzugriffsfunktion sqrt gegeben:
**coordination float sqrt(read float);**

Durch Angabe des Schlüsselworts 'read' wird festgelegt, daß ein Koordinatorobjekt, welches als erstes (und einziges) Argument die Funktion sqrt übergeben wird, durch diesen Funktionsaufruf gelesen wird.

### 6. Progammierbeispiel

Es wird ein einfaches Beispiel aus dem Bereich der Numerik betrachtet, die Normalisierung eines Vektors :
Ein vorgegebener Vektor *v* soll auf Länge 1 gebracht werden und seine Richtung im *n*-dimensionalen Raum behalten. Ein sequentielles Programm, das die Berechnung ausführt, sieht in C++ aus wie folgt:

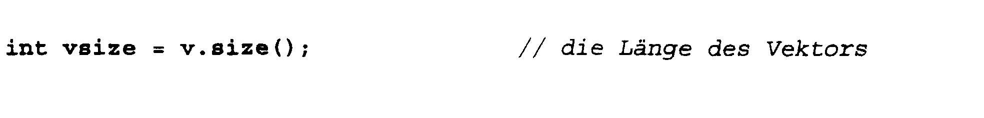

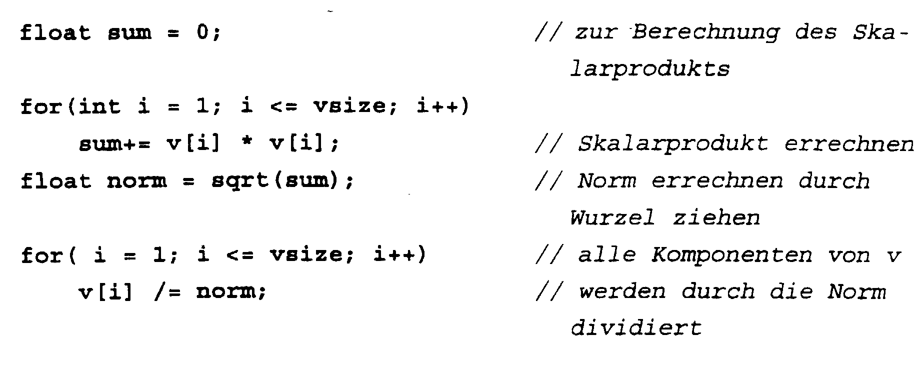

Dieses Programm kann parallelisiert werden, indem der Vektor in Streifen unterteilt wird und jeder Streifen durch einen anderen Prozeß behandelt wird. Jeder Prozeß berechnet einen Teil des Skalarprodukts, die Teilsummen werden dann (gemeinschaftlich) addiert. Sobald dieser Wert zur Verfügung steht (d.h. wenn jeder Prozeß seine Teilsumme hinzugefügt hat), kann jeder Prozeß die Normberechnung und Division ausführen (die Berechnung der Norm braucht eigentlich nur einmal stattzufinden, was hier der Einfachheit halber nicht getan wird). Es ergibt sich ein sehr häufig vorkommendes Zugriffsmuster: Zur Berechnung des Gesamtskalarproduktes wird ein Koordinatorobjekt deklariert, das von jedem Prozeß genau einmal geschrieben wird, bevor er gelesen werden darf. Dies geschieht ebenfalls genau einmal pro Prozeß, ist jedoch hier nicht wesentlich, da nach dem Lesen das Koordinatorobjekt nicht wieder geschrieben wird.

Die Einheit der parallelen Ausführung ist hier die Funktion 'normalize'. Diese hat als Parameter die untere und obere Grenze des Teilvektors, der zu behandeln ist, sowie eine Referenz auf den Gesamtvektor. Die Funktion wird von den beteiligten Prozessen mit jeweils passenden unteren und oberen Indizes aufgerufen. Die Programmierung der Prozeßerzeugung und Arbeitsverteilung wird hier nicht mit angegeben, weil sie für das Verständnis des Programmierens mit Koordinatorobjekten nicht wesentlich ist.

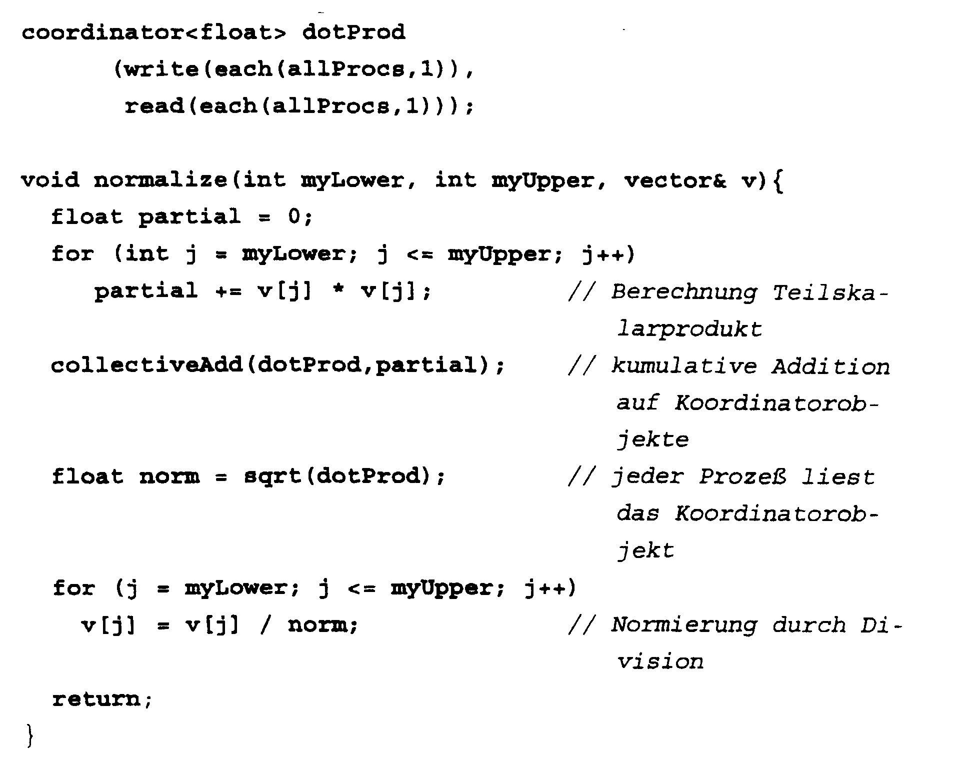

Dieses Beispiel zeigt, wie ohne jegliche Programmierung von Synchronisation oder Kommunikation ein kontrollierter Zugriff auf 'dotProd' stattfindet. Die benutzerdefinierte Funktion 'collectiveAdd' wird hierzu als Schreiboperation bezüglich ihres ersten Arguments spezifiziert - genauer gesagt als *kollektive* Schreiboperation. Kollektive Operationen werden im folgenden Abschnitt näher erläutert.

Erst wenn alle Prozesse durch Aufruf von 'collectiveAdd' ihren Anteil geschrieben haben, gilt die globale Schaltbedingung, die den Übergang in den Lesezustand auslöst und damit das Lesen durch die Funktion 'sqrt' zuläßt. Der folgende Übergang aus dem Lesezustand in den Schreibzustand hat hier keine praktischen Auswirkungen mehr, weil das Programmfragment abgeschlossen ist. Wenn es innerhalb einer Schleife ausgeführt würde, käme das Schalten aus dem Lesezustand in den Schreibzustand ebenfalls zum Tragen.

### 7. Kollektive Schreiboperationen

Kollektive Operationen (z.T. auch Reduktionsoperationen genannt) werden vor allem im Bereich *scientific computing* eingesetzt (vgl. u.a. [PVM], [MPI], [P4], [SPLIT C]) und erlauben oft eine wesentlich vereinfachte Schreibweise von Algorithmen, wenn der Wert eines Objekts wiederholt initialisiert werden muß. Koordinatorobjekte bieten auf sehr einfache Weise Unterstützung für kollektive Operationen durch eine automatisierte Reinitialisierung jeweils zu Beginn einer Schreibphase.

Eine Koordinatorobjekt-Implementierung muß hierzu dem Benutzer eine generische Funktion 'collective' zur Verfügung stellen, die es ermöglicht, auch benutzerdefinierte kollektive Operationen zu definieren - die im obigen Beispiel verwendete Funktion 'collectiveAdd' z.B. auf folgende Weise:

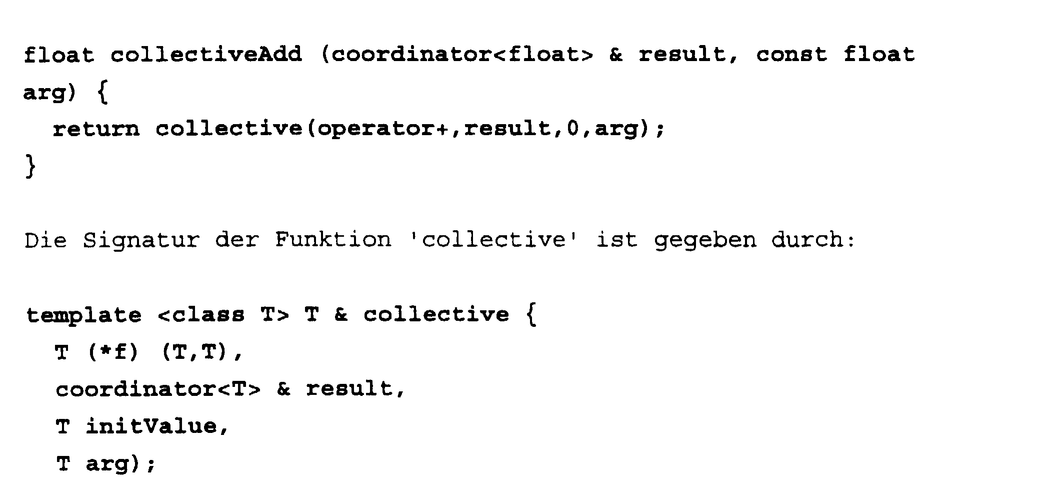

Die Semantik von 'collective' kann folgendermaßen beschrieben werden:
- Ein Aufruf von 'collective' führt einen Schreibzugriff auf das Argument 'result' durch.
- Ist ein Aufruf von 'collective' der erste Aufruf innerhalb einer Schreibphase, so ergibt sich der neue Wert des coordinators 'result' als Resultat des Funktionsaufrufs 'f(initvalue,arg)'.
- Bei nachfolgenden Aufrufen ergibt sich der neue Wert des coordinators 'result' als Resultat des Funktionsaufrufs 'f(result,arg)'.
- Bezüglich 'arg' ist 'collective' als Lesezugriff definiert; als Argumente 'f' und 'initValue' dürfen keine coordinators übergeben werden.

### 8. Semantik und Implementierung von Koordinatorobjekten

Zugriffsmuster definieren ein Parallelitätsverhalten, das am besten mit automatischer Koordination bezeichnet werden kann. Dieses Verhalten wird im folgenden genauer beschrieben. Zunächst wird die Semantik von Koordinatorobjekten anhand eines zentralen Kontrollprogramms für ein Koordinatorobjekt dargestellt. Dies stellt eine Minimalanforderung an jede Implementierung von Koordinatorobjekten dar. Implementierungsvarianten werden anschließend besprochen.

### 8.1 Ein zentrales Kontrollprogramm für ein Koordinatorobjekt

Im folgenden wird ein zentrales Kontrollprogramm für ein Koordinatorobjekt vorgestellt, das die Semantik des Koordinatorobjektes definiert. Es existiert konzeptionell eine Instanz dieses Programms für jedes Koordinatorobjekt. Implementierungen dürfen die Aufgaben mehrerer solcher Instanzen in einem Programm zusammenfassen oder die Aufgaben des Kontrollprogramms auf mehrere kooperierende Prozesse verteilen. In Systemen mit gemeinsamem Speicher kann die im folgenden beschriebene Kommunikation mit dem Kontrollprogramm auch ohne expliziten Nachrichtenaustausch stattfinden, wenn sie auf andere geeignete Weise implementiert wird. Durch solche Änderungen sollte jedoch der logische Ablauf bis auf zeitliche Nichtdeterminismen gleich bleiben.

### 8.2 Eventgesteuerte Arbeitsweise

Zur Einführung in die Arbeitsweise des Kontrollprogramms werden in den nachfolgenden Abschnitten die verschiedenen möglichen Zugriffe eines Prozesses auf ein Koordinatorobjekt anhand von Ablaufdiagrammen beschrieben. Diese zeigen die im Zusammenhang mit einem Zugriff jeweils stattfindende (implizite) Kommunikation mit dem Kontrollprogramm (*control program*). Die Nachrichten an das Kontrollprogramm werden im weiteren auch als Events bezeichnet. Zunächst zeigen wir das Grundschema für die mit einem Zugriff verbundene Kommunikation, Figur 4.

Der betrachtete Prozeß schickt einen Auftrag (requireAccess) an das Kontrollprogramm und wartet auf die Auftragsbestätigung des Kontrollprogramms, bevor er seinen Programmablauf fortsetzt. Aus Sicht des Prozesses verhält sich dieser Ablauf also wie ein *'remote procedure call* (rpc)'. Das Kontrollprogramm registriert den Auftrag als Event. Das Event wird möglicherweise verzögert, wenn es im augenblicklichen Zustand des Koordinatorobjektes nicht gleich bearbeitet werden kann. Hierzu verwaltet das Kontrollprogramm die Events in vier unterschiedlichen Event-Mengen, die weiter unten genauer beschrieben werden.

Wird ein Event schließlich zur Bearbeitung ausgewählt, so führt das Kontrollprogramm zunächst einige eventbezogene Aktivitäten, den sogenannten Prolog durch. Bei verteiltem Speicher beinhaltet der Prolog u.a. das Bereitstellen der Koordinatordaten beim beauftragenden Prozeß. Daraufhin wird die Auftragsbestätigung (rpcFinish) an den beauftragenden Prozeß geschickt, so daß dieser fortfahren kann. Beinhaltet der nachfolgende Code des Prozesses Zugriffe auf die Koordinatordaten, so muß nach Beendigung dieser Zugriffe eine Abschlußmeldung (accessDone) an das Kontrollprogramm erfolgen, damit dieses die abschließenden eventbezogenen Aktivitäten - den Epilog - durchführen kann. Der beauftragende Prozeß muß nicht auf die Beendigung des Epilogs warten, da jeder weitere Zugriff auf das Koordinatorobjekt einen neuen Auftrag an das Kontrollprogramm voraussetzt.

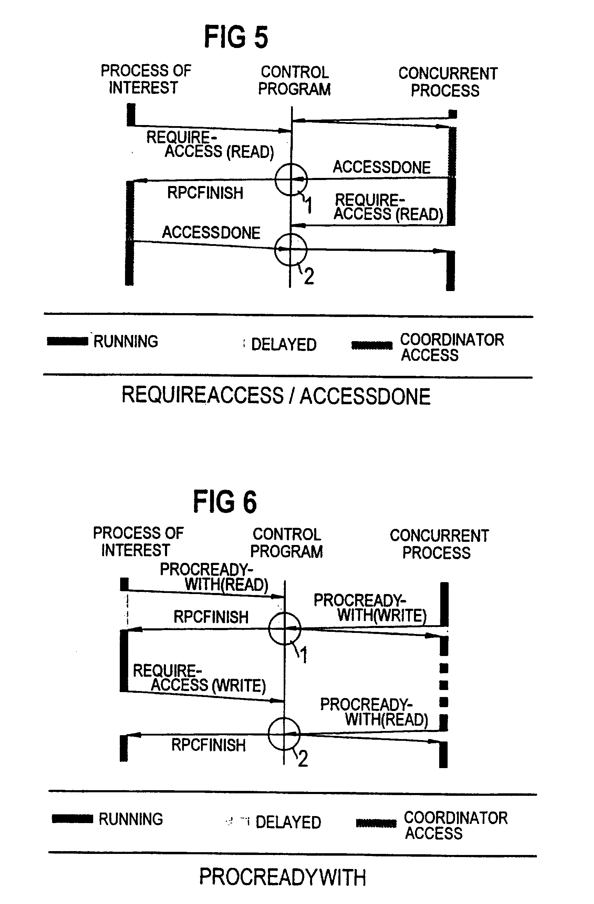

In den weiteren Diagrammen (Figuren 5-8) werden Prolog und Epilog nicht explizit dargestellt. Es werden beispielhaft zeitlich verzahnte Zugriffe eines weiteren Prozesses (*concurrent process*) dargestellt, die das Ablaufverhalten des betrachteten Prozesses (*process of interest*) beeinflussen, d.h. verzögern.

### 8.2.1 Lesender bzw. schreibender Zugriff

Das Diagramm, Figur 5, zeigt einen lesenden Zugriff (requireAccess(read)), gilt aber analog auch für schreibende Zugriffe (requireAccess(write)). Der zugreifende Prozeß darf erst zugreifen, wenn er vom Kontrollprogramm die Bestätigung (rpcFinish) seines Zugriffswunsches bekommen hat. Im Diagramm wird angenommen, daß die Lesezugriffe exklusiv sind, weshalb vor der Bestätigung die Beendigung des bereits begonnenen konkurrierenden Zugiffs abgewartet wird (1). Die Beendigung des Zugriffs muß dem Kontrollprogramm bekannt gegeben werden (accessDone), wodurch ggf. verzögerte Events zur Bearbeitung gelangen (2).

### 8.2.2 Die procReadyWith Anweisung

Die 'procReadyWith' Anweisung signalisiert dem Koordinatorobjekt, daß der aufrufende Prozeß seinen Anteil an einer Schreib- bzw. Lesephase beendet hat. Sie ist nur sinnvoll und erlaubt, wenn für die entsprechende Phase ein 'each(...)' Zugriffsmuster vereinbart wurde. Bei einem Zugriffsmuster 'each(*group, numberOfAccesses*)' wird die Phase für den Prozeß ggf. vor Erreichen der vereinbarten Zahl *'numberOfAccesses'* von Zugriffen beendet, d.h. alle weiteren Zugriffe werden bis zum nächsten Erreichen der betreffenden Phase verzögert. Da die procReadyWith Anweisung nicht mit einem Zugriff auf das Koordinatorobjekt durch den beauftragenden Prozeß verbunden ist, ist das Kommunikationsprotokoll hier einfacher: Die 'accessDone' Nachricht an das Kontrollprogramm kann entfallen.

Im Beispieldiagramm, Figur 6, wird der Kommunikationsablauf einer 'procReadyWith' Anweisung für die Lesephase gezeigt. Der aufrufende Prozeß muß mindestens solange verzögert werden, bis sich das Koordinatorobjekt in dem Zustand befindet, auf den sich die Anweisung bezieht - im Beispiel ist dies der Lesezustand, der hier durch eine 'procReadyWith' Anweisung des konkurrierenden Prozesses erreicht wird (1). Eine solche Wartesituation kann z.B. auftreten, wenn der Prozeß nach Beendigung seiner Schreibphase in der folgenden Lesephase keinen einzigen Lesezugriff auf das Koordinatorobjekt durchführt, sondern seine Lesephase sogleich durch die 'procReadyWith' Anweisung beendet. Ein nachfolgender Schreibzugriff wird verzögert, bis das Koordinatorobjekt wieder in den Schreibzustand wechselt (2), siehe Figur 6.

### 8.2.3 Die switchFrom Anweisung

Die 'switchFrom' Anweisung ist im Gegensatz zur 'procReadyWith' Anweisung ein globales Zustandswechsel-Signal. Der Zustand des Koordinatorobjektes wechselt nach Beendigung aller bereits begonnenen Zugriffe. Die Anweisung ist für alle Zugriffsmuster erlaubt; bei Zugiffsmustern mit Zähler wechselt der Zustand auch dann, wenn die vereinbarte Zahl von Zugriffen in der momentanen Phase noch nicht erreicht ist.

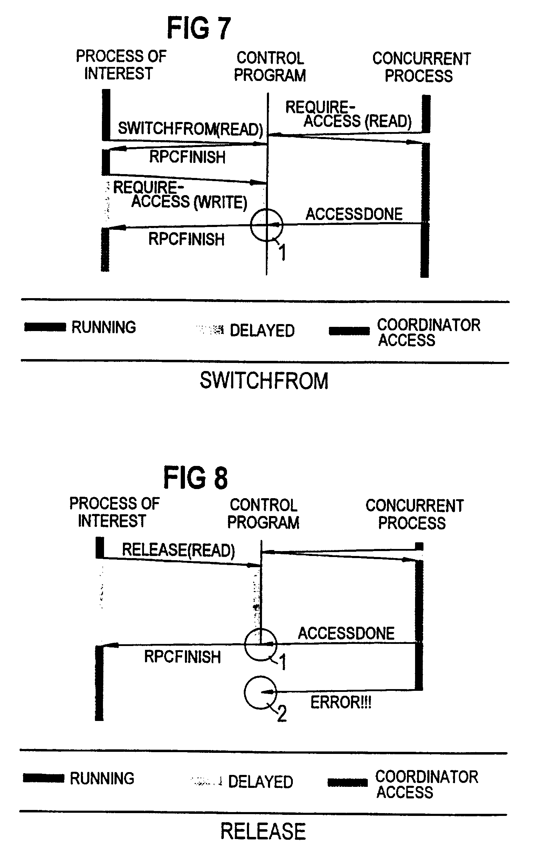

Das Diagramm, Figur 7, zeigt den Kommunikationsablauf einer 'switchFrom' Anweisung für die Lesephase. Ein nachfolgender Schreibzugriff wird verzögert bis der momentane Lesezugriff des anderen Prozesses beendet ist, da der Zustand des Koordinatorobjektes erst zu diesem Zeitpunkt wechselt (1).

Auch bei der 'switchFrom' Anweisung ist eine Verzögerung durch das Kontrollprogramm möglich und daher die Bestätigung des Kontollprogramms nötig, z.B. für den Fall, daß ein Prozeß, der ausschließlich lesend auf das Koordinatorobjekt zugreift, zwei 'switchFrom' Anweisungen hintereinander ausführt, ohne zwischendurch einen Lesezugriff durchgeführt zu haben.

### 8.2.4 Die release Anweisung

Die 'release' Anweisung beendet die Koordinierung der vom Koordinatorobjekt überwachten Daten. Diese Daten werden dem aufrufenden Prozeß (als Rückgabewert der 'release' Anweisung) zur alleinigen Verfügung gestellt. Daher muß der Prozeß warten, bis die in der Anweisung angegebene Phase beendet ist - im Beispiel geschieht dies durch Beendigung des Lesezugriff des konkurrierenden Prozesses (1). Der Abschluß einer 'release' Anweisung ist die letzte erlaubte Aktion des Kontrollprogramms, d.h. jeder weitere Zugriff eines beliebigen Prozesses auf das Koordinatorobjekt ist als Fehler anzusehen, Figur 8.

### 8.3 Eventverarbeitung durch das Kontrollprogramm

Die obigen Zugriffe (Events) können sich innerhalb eines Prozesses beliebig abwechseln (natürlich mit Ausnahme der 'release' Anweisung). Das Kontrollprogramm wird den Prozeß bei jedem Event solange verzögern, solange es gemäß dem für das Koordinatorobjekt spezifizierten Zugriffsmuster erlaubt ist. Um dies zu ermöglichen, verwaltet das Kontrollprogramm die von den verschiedenen Prozessen eintreffenden Events in vier verschiedenen Eventmengen, die nachfolgend beschrieben werden. Es wird hier bewußt der Begriff "Mengen" (und nicht "Warteschlangen") benutzt, da davon ausgegangen wird, daß die Bearbeitungsreihenfolge vorliegender Events beliebig ist.

### 8.3.1 Die Menge aktiver Events

Diese Menge enthält alle noch nicht bearbeiteten Events, die momentan zur Bearbeitung anstehen. Dies sind entweder "neue" Events (die vom Kontrollprogramm noch nie betrachtet wurden) oder solche, die durch Bearbeitung eines Events aus einer der nachfolgend aufgeführten Wartemengen erneut in die Menge aktiver Events übertragen wurden. Das Kontrollprogramm entnimmt der Menge aktiver Events durch Aufruf der Prozedur 'nextEvent' jeweils ein Event. Die Prozedur wartet, bei leerer Menge ggf., bis ein Prozeß ein Event erzeugt. Das Verfahren, nach dem bei mehreren vorliegenden Events das zu entnehmende Event ausgesucht wird, bleibt der Implementierung überlassen. Eine mögliche Priorisierung der Entnahme ist die Folgende:
1. 'accessDone' Events, um weitere exklusive Zugriffe oder einen Phasenwechsel zu ermöglichen;
2. 'switchFrom' Events, da dies signalisiert, daß eine Phase insgesamt beendet ist;
3. 'procReadyWith' Events, da ein Prozeß seine Teilaufgabe erfüllt hat - ein Phasenwechsel kann ggf. beschleunigt werden;
4. 'requestAccess' Events - bei verteiltem Speicher nur diejenigen von Prozessen, die die Koordinatordaten bereits lokal vorliegen haben - hierdurch kann unnötiger Datenaustausch vermieden werden;
5. sonstige 'requestAccess' Events;
6. 'release' Event.

### 8.3.2 Menge der Events, die in der nächsten Schreibphase bearbeitet werden können

Alle Events, von denen das Kontrollprogramm feststellt, daß sie (frühestens) in der nächsten Schreibphase bearbeitet werden können, werden durch einen Aufruf 'delayForPhase(write,*event*)' in diese Wartemenge aufgenommen. Beim nächsten Übergang des Koordinatorobjektes in den Schreibzustand werden alle in dieser Menge angesammelten Events durch Aufruf von 'enableEventsDelayedForPhase(write)' wieder in die Menge aktiver Events übertragen.

### 8.3.3 Menge der Events, die in der nächsten Lesephase bearbeitet werden können

Analog zur soeben genannten Menge gibt es die Wartemenge für die Lesephase. Events werden durch 'delayForPhase(read,*event*)' hinzugefügt und durch 'enableEventsDelayed-ForPhase(read)' beim Übergang in den Lesezustand wieder in die Menge aktiver Events übertragen.

### 8.3.4 Menge der Events, die exklusiven Koordinatorzugriff benötigen

Neben den Events, die bis zu einer nachfolgenden Phase verzögert werden müssen, gibt es die Menge von 'requireAccess' Events, die noch in der momentanen Phase bearbeitet werden können, jedoch erst, nachdem ein bereits begonnener exklusiver Zugriff eines anderen Prozesses abgeschlossen ist. Zum Hinzufügen eines Events zu dieser Menge dient die Prozedur 'delayForExclusiveAccess(*event*)'. Nach Beendigung eines exklusiven Zugriffs werden die seit Beginn des Zugriffs in dieser Menge angesammelten Events durch 'enableEventsDelayed-ForExclusiveAccess()' wieder aktiviert.

### 8.4 Variablen, die den Status des Koordinatorobjektes beschreiben

Das Kontrollprogramm arbeitet mit einer Reihe von Variablen, die den momentanen Status des Koordinatorobjektes beschreiben. Diese Variablen werden hier mit ihren Initialwerten aufgelistet:
**pendingAccesses = 0;**
Zahl der Prozesse, denen momentan der Zugriff auf das Koordinatorobjekt gestattet ist. Der Wert der Variablen muß bei einem Phasenwechsel 0 sein. Falls Zugriffe einer Phase nicht konfliktfrei sind, darf 'pendingAccesses' maximal den Wert 1 haben.
**globalReady = false;**
Dies ist ein Flag, das angibt, ob der Zustand des Koordinatorobjekts nach Beendigung der bereits begonnenen Zugriffe wechselt (true) oder ob vor dem Wechsel weitere Events bearbeitet werden müssen (false).
**globalCount = 0;**
Im Falle von 'arbitrary(*numberOfAccesses*)' Zugriffsmustern dient diese Variable als globaler Zähler der Zugriffe in einer Phase.
**procReady[] = {false, ..., false};**
Im Falle von 'each(...)' Zugriffsmustern gibt diese Tabelle von Flags für jeden Prozeß der betreffenden Prozeßgruppe an, ob der jeweilige Prozeß seine Schreib- bzw. Lesephase beendet hat.
**procCount[] = {0, ... ,0};**
Im Falle von *'each*(*group,numberOfAccesses*)*'* Zugriffsmustern enthält diese Tabelle die prozeßbezogenen Zugriffszähler.
**releaseByProcess = Ø;**
Diese Variable wird bei der Verarbeitung eines 'release' Events gesetzt und gibt dann den Prozeß an, dem die vom Koordinatorobjekt überwachten Daten bei Beendigung der momentanen Phase zur Verfügung gestellt werden.
**notWritten = true;**
Dieses Flag dient der Unterstützung von sogenannten kollektiven Operationen. Zu Beginn einer Schreibphase erhält die Variable jeweils den Wert 'false', um dem ersten Schreibzugriff innerhalb der Phase anzeigen zu können, daß er der erste ist. Hierdurch wird eine automatische Reinitialisierung des Koordinatorwerts in jeder Schreibphase ermöglicht.

### 8.5 Notation

Die operationelle Semantikdefinition wird in Form von Pseudo-Code gegeben, der sich an C bzw. C++ Schreibweise orientiert. Die Semantik einiger zusätzlich verwendeter Konstrukte muß jedoch noch erläutert werden:
**forall *id* in *group* : *block***
führt *'block'* für jeden Prozeß der Prozeßgruppe *'group'* einmal aus; die Ausführung wird jedoch nicht für weitere Prozesse fortgesetzt, wenn der Kontrollfluß (z.B. durch return) den *'block'* verläßt. Im *'block'* ist die Variable *'id'* an den jeweils bearbeiten Prozeß gebunden. 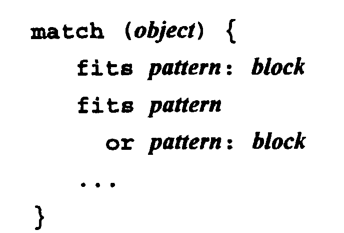 führt einen Muster-Vergleich (pattern matching) bezüglich *'object'* durch. Bestandteil eines *pattern* können konstante Werte sein (gekennzeichnet durch Quotierung (z.B. 'EACH'), die dann dem entsprechenden Wert in *'object'* entsprechen müssen (z.B. EACH), oder aber Variablen, an die die entsprechenden Werte des vorgegebenen Musters *'object'* gebunden werden. Für den ersten erfolgreichen Vergleich wird der zugehörige *'block'* ausgeführt.

Ein solcher Muster-Vergleich wird u.A. mit dem für die jeweilige Zugriffsphase *'phase'* geltenden Zugriffsmuster des Koordinatorobjekt s durchgeführt, das jeweils durch die Funktion 'accessSpec(phase)' geliefert wird. Die möglichen Muster sind:
**(EACH*,processGroup,maxCount*)**
**(EACH*,processGroup*)**
**(ARBITRARY,*maxCount*)**
**(ARBITRARY)**

Die Werte *'processGroup'* und *'maxCount'* werden dabei an die im passenden *pattern* angegebenen Variablen gebunden, um auf sie innerhalb des *'block'* zugreifen zu können.

Im Programmkontext wird ein event als ein strukturierter Datentyp aufgefaßt, der über die folgenden Komponenten verfügen muß:
**eventSpec**
die Art des Event, d.h. einer der Werte 'requireAccess', 'accessDone', 'procReadyWith', 'switchFrom' oder 'release';
**process**
der zugreifende Prozeß, d.h. der Prozeß, der das Event erzeugt hat;
**phase**
die Phase, für die das Event bestimmt ist, d.h. entweder 'write' oder 'read';

### 8.6 Das Kontrollprogramm

Die Bedeutung einiger der verwendeten Funktionen / Prozeduren wurden bereits erläutert. Diese und einige weitere Prozeduren werden nicht durch Pseudo-Code spezifiziert. Sie sind entweder durch ihre Namensgebung selbsterklärend oder werden in der anschließenden Diskussion der Implementierung noch angesprochen. Alle Funktionen / Prozeduren, für die eine Pseudo-Code Spezifikation existiert, werden bei ihrer Verwendung durch Fettschrift hervorgehoben.

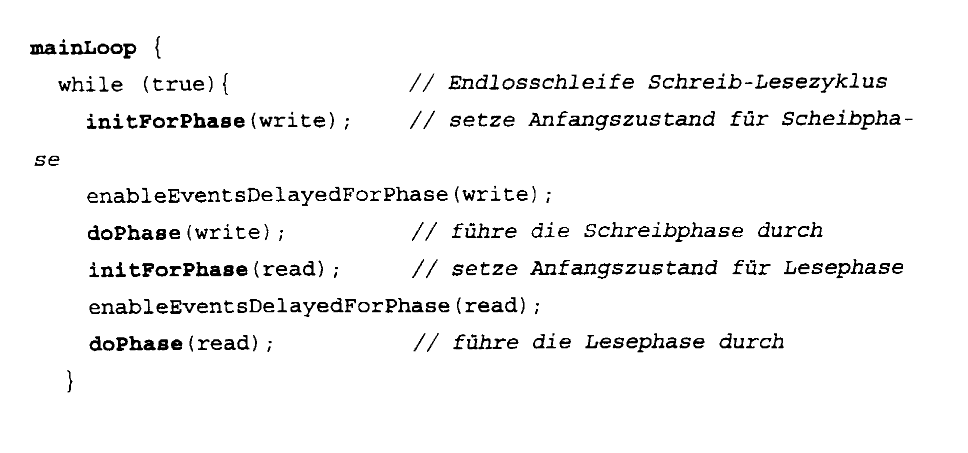

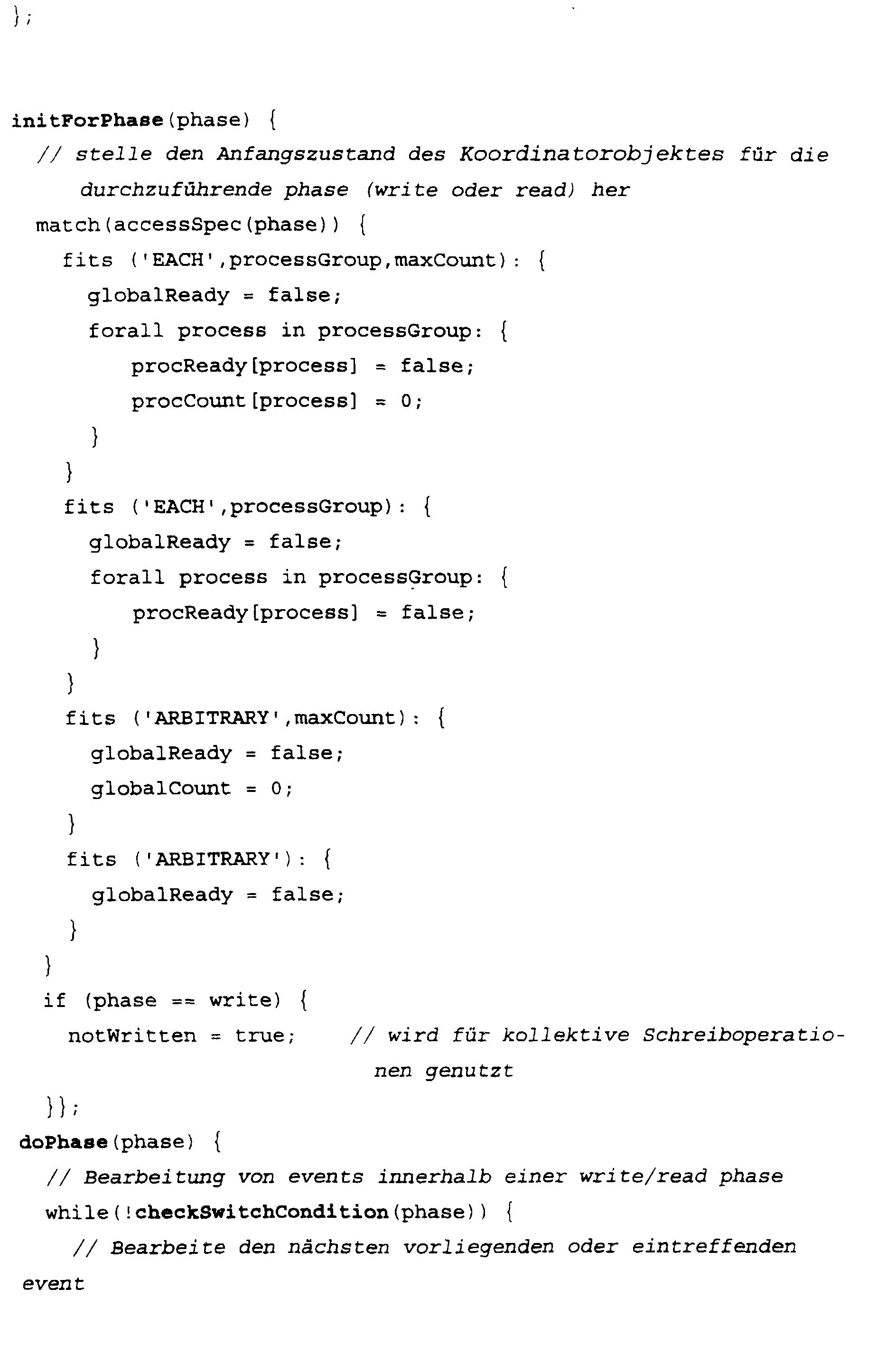

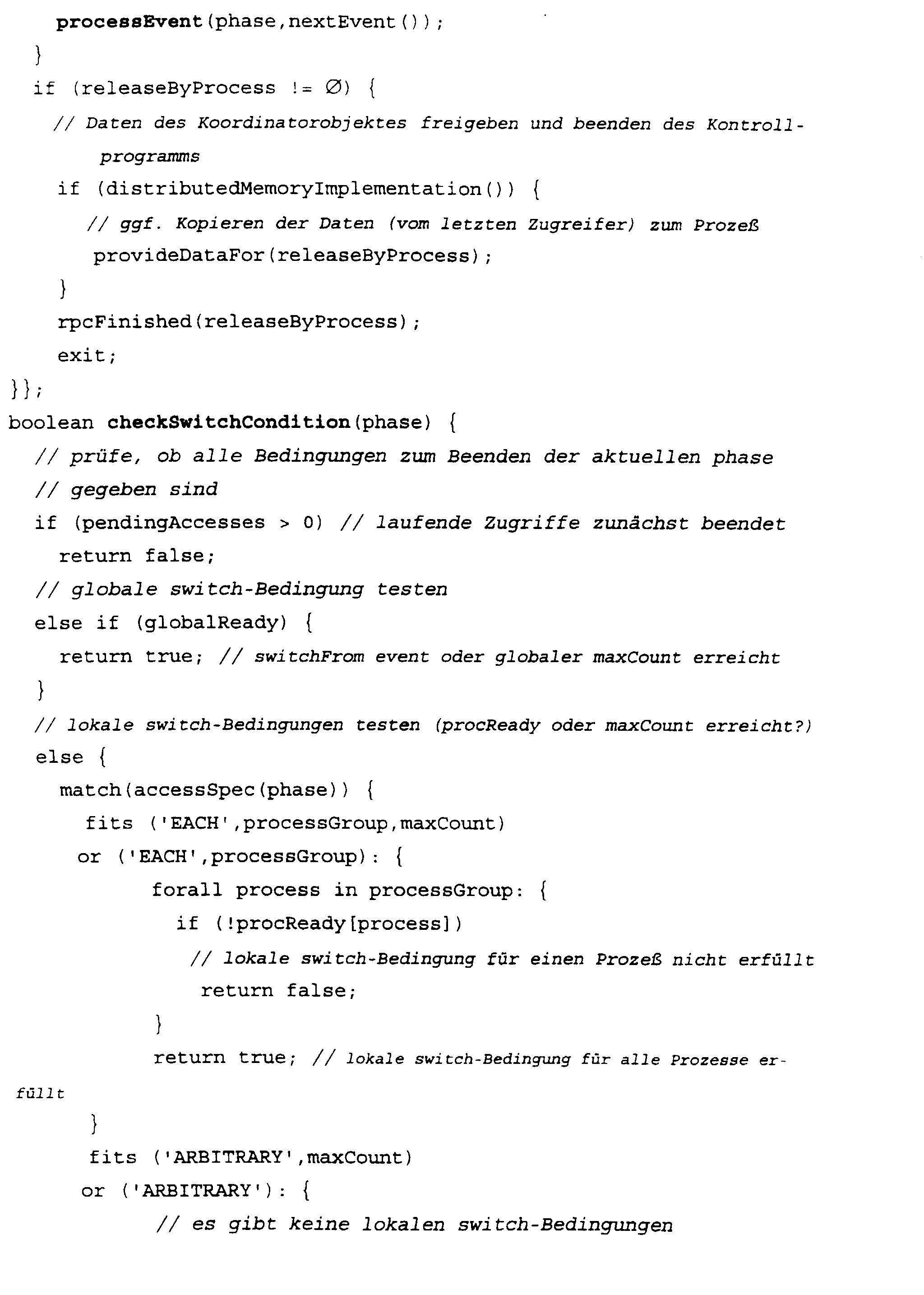

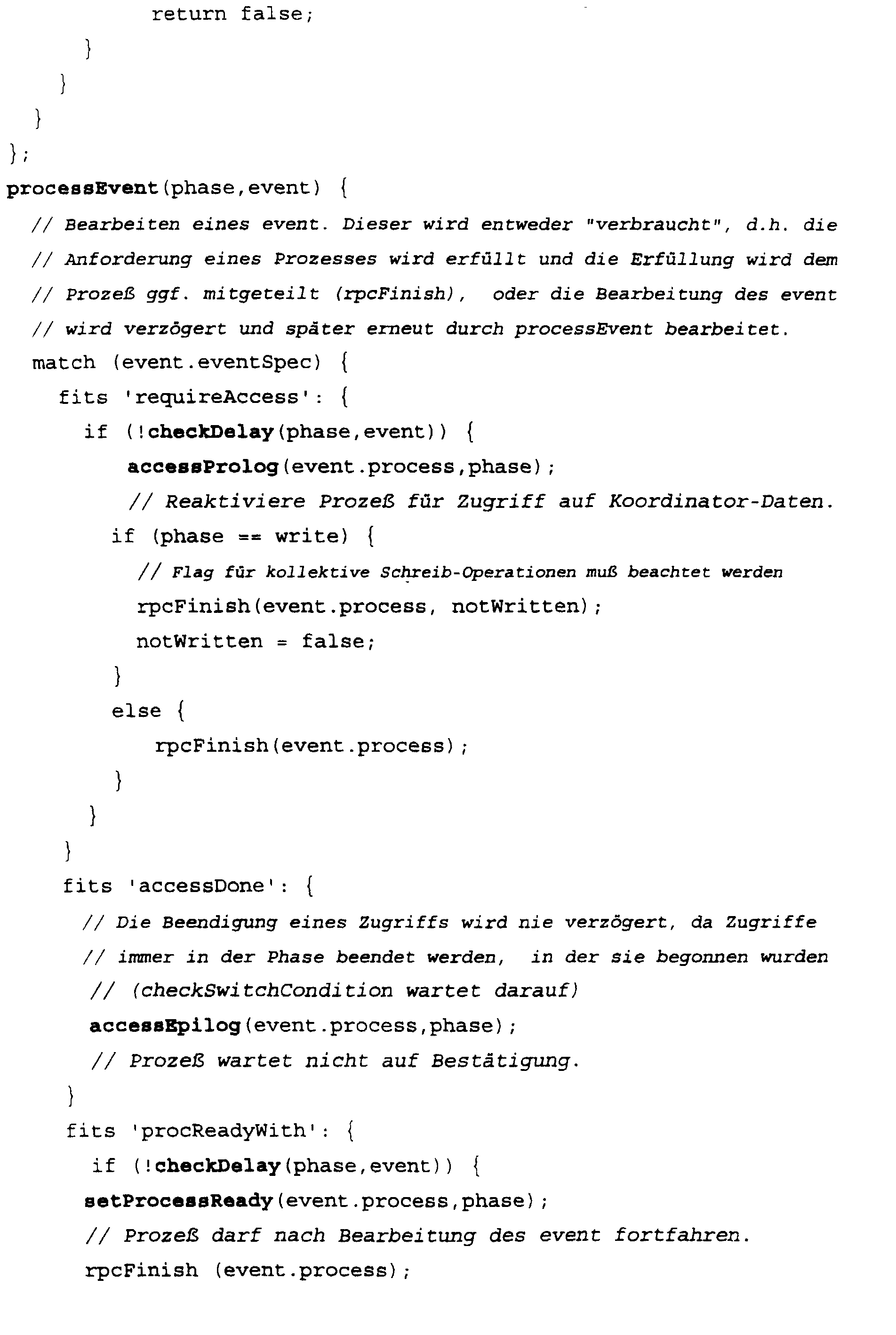

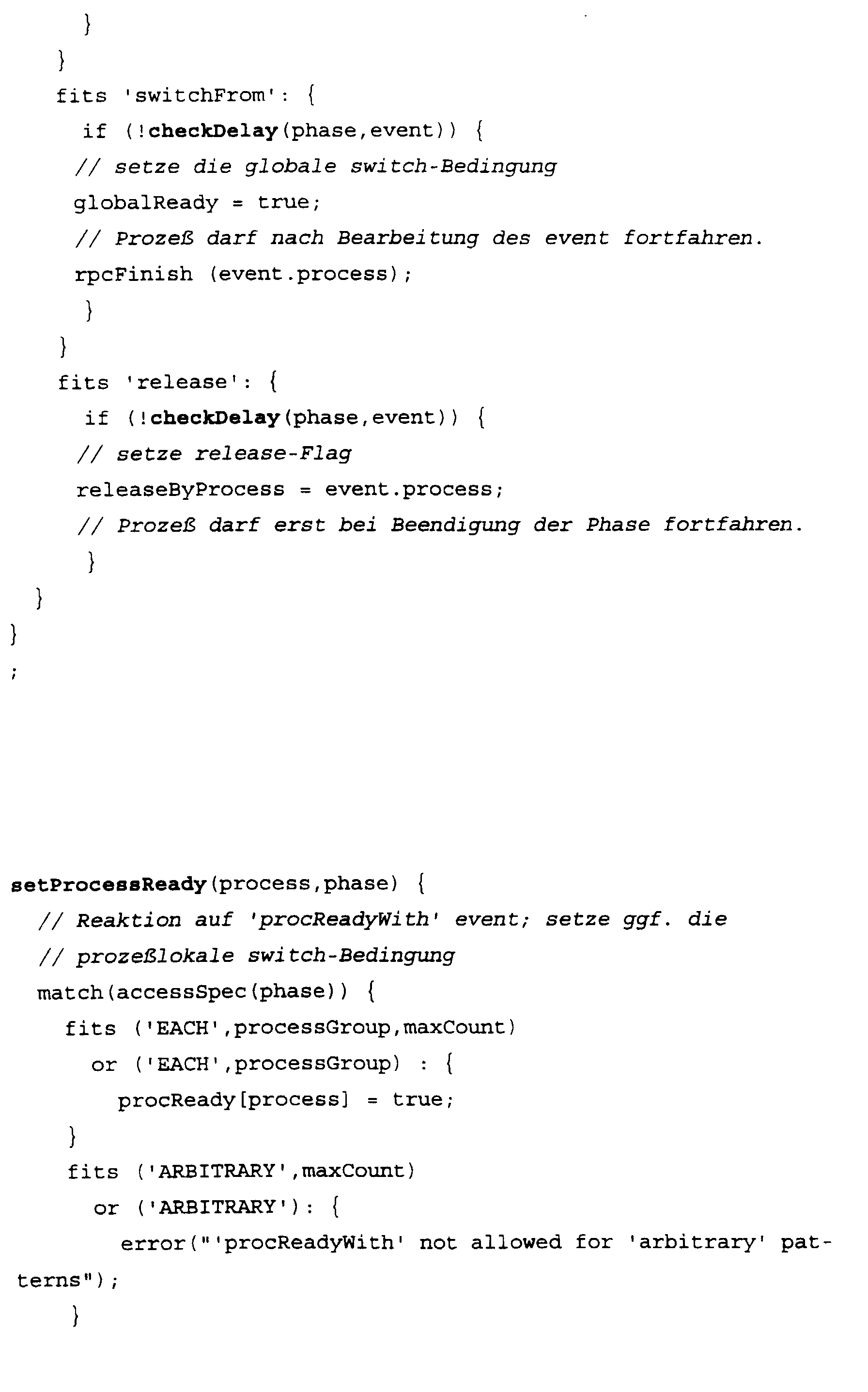

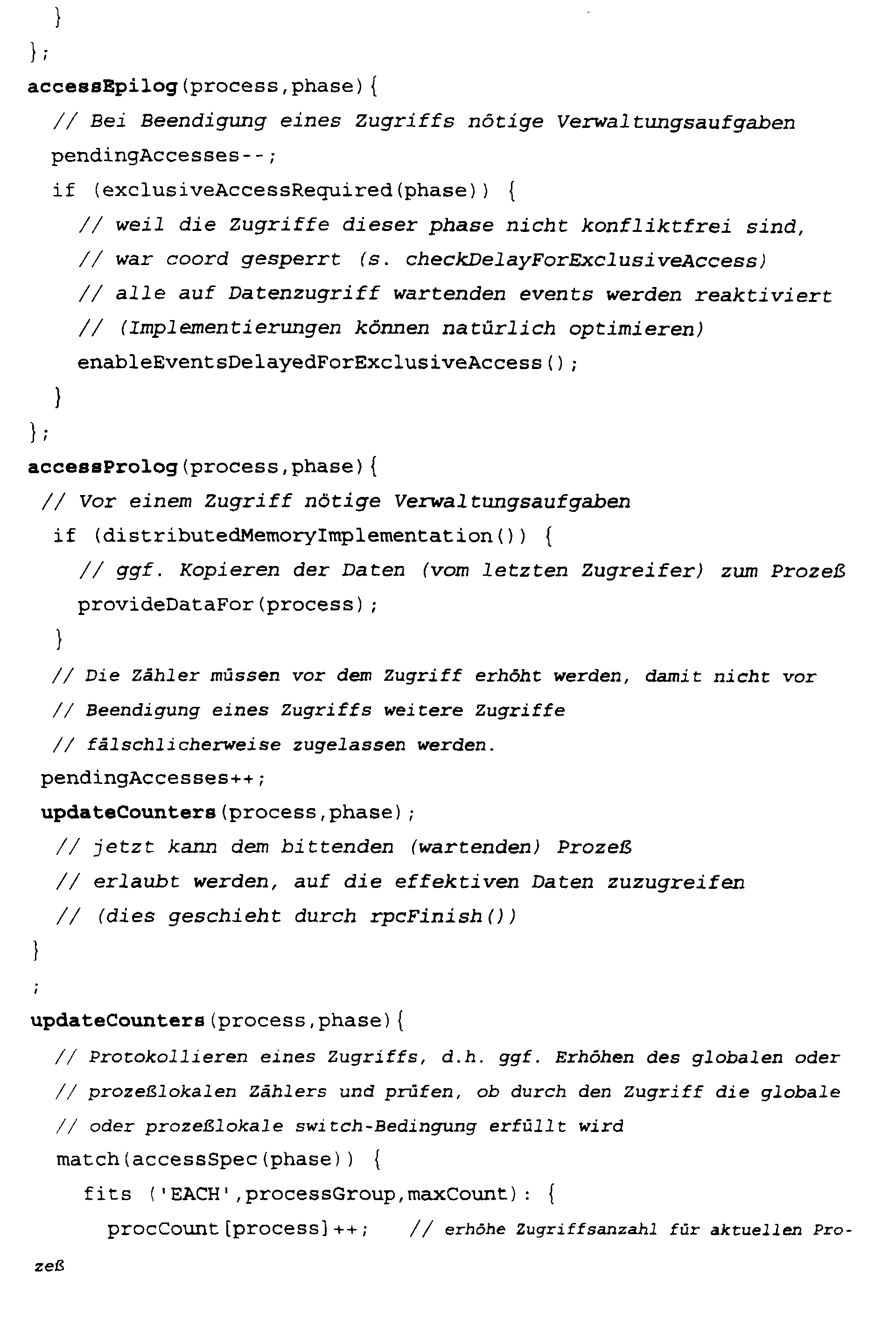

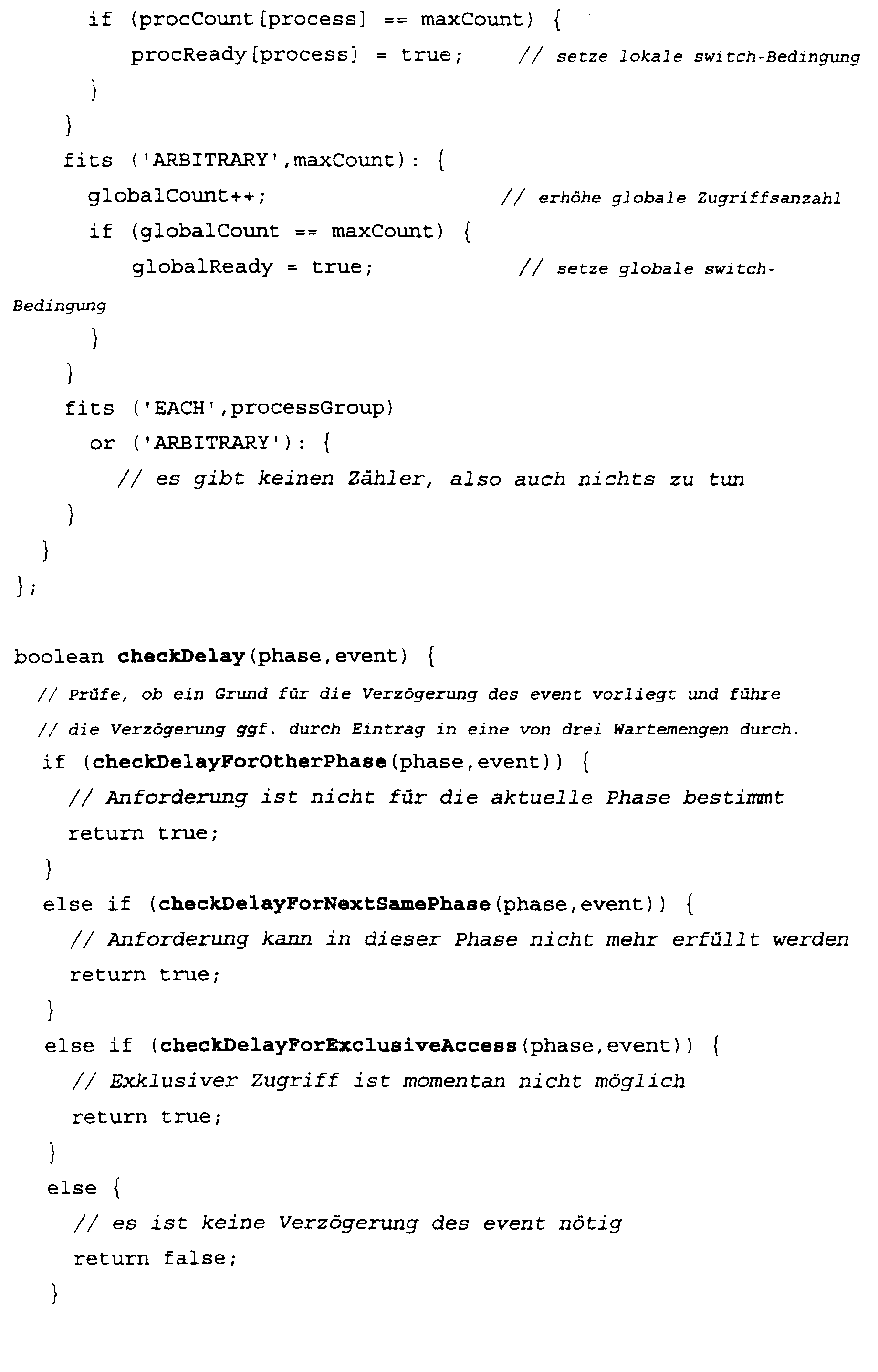

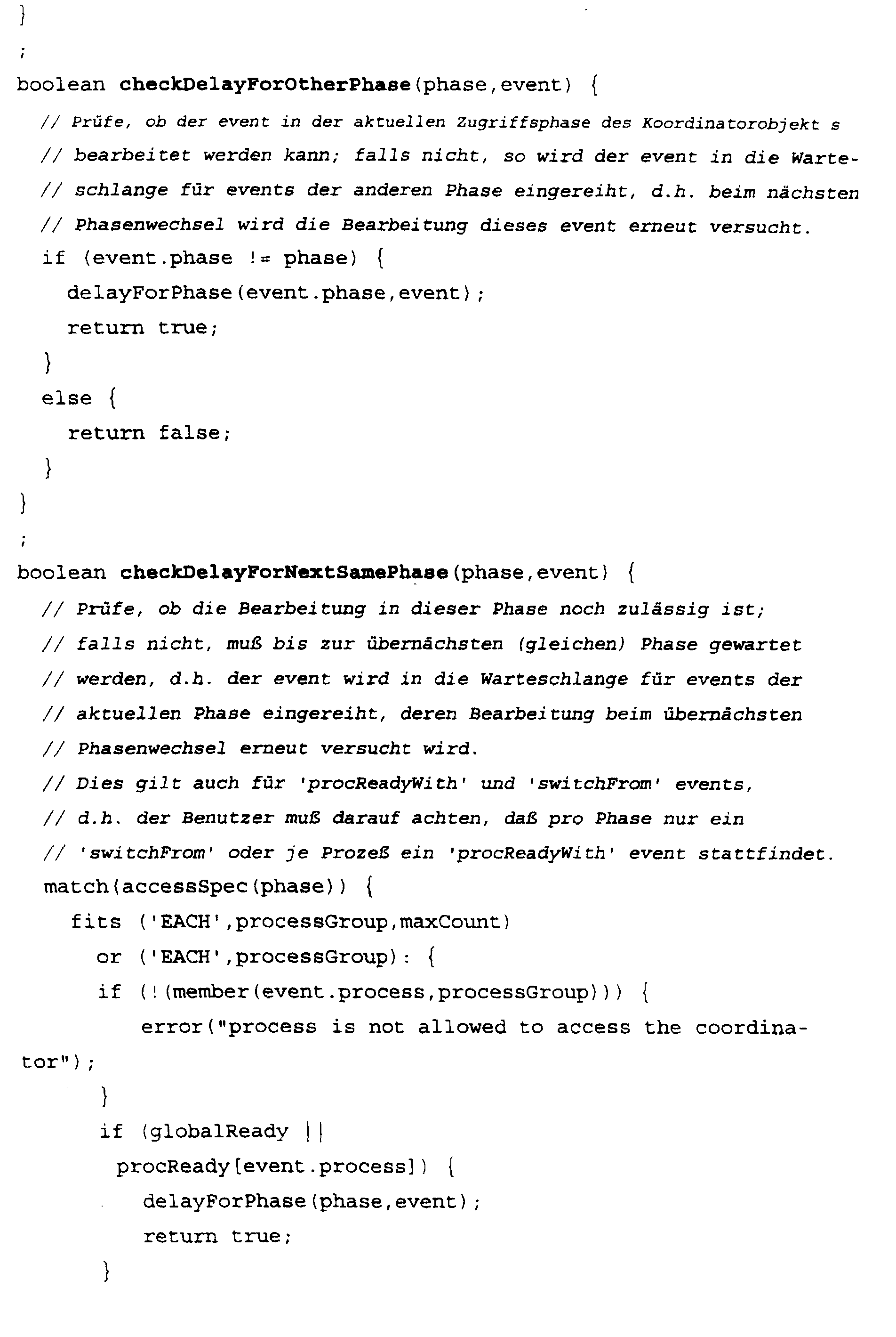

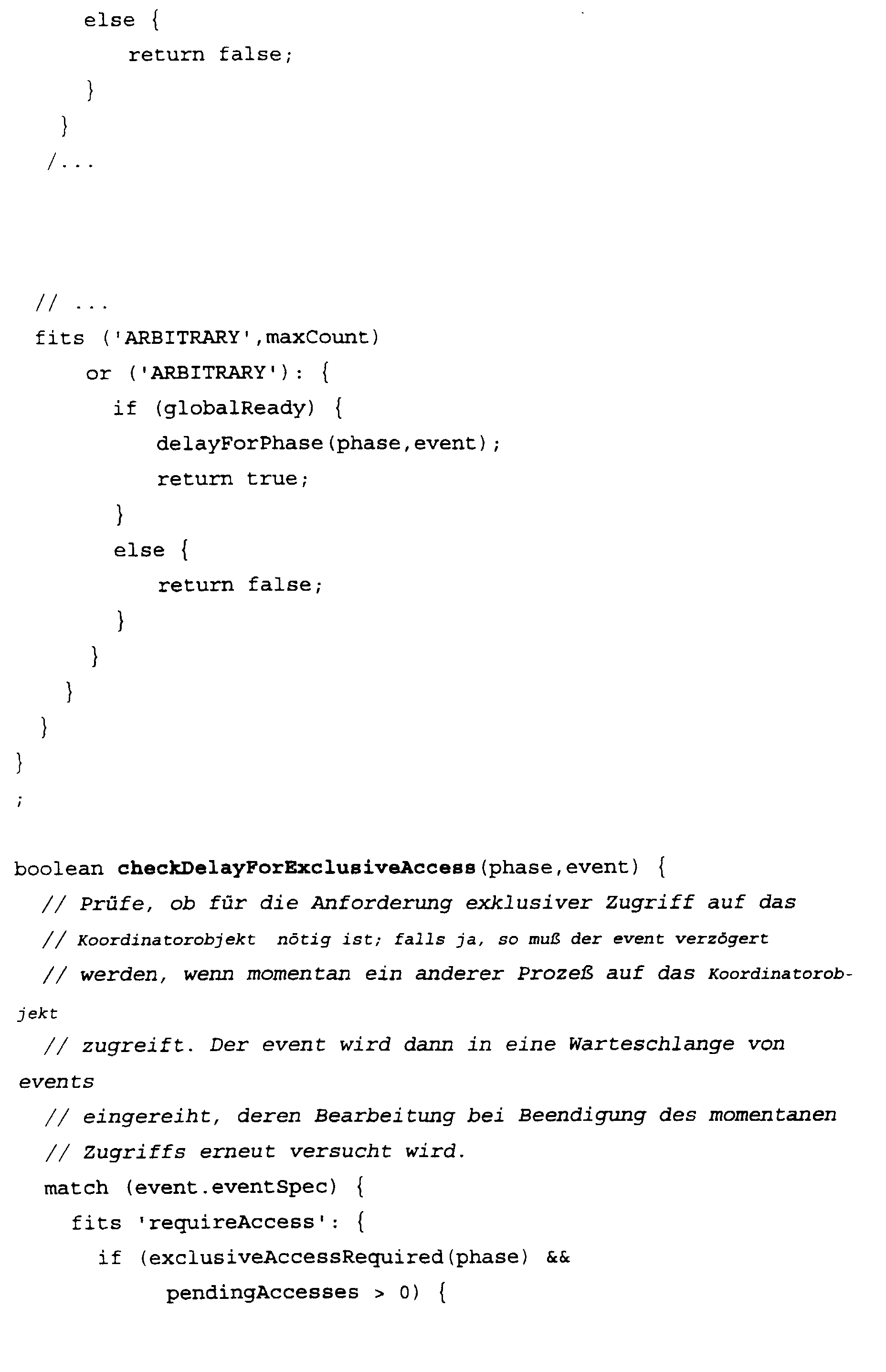

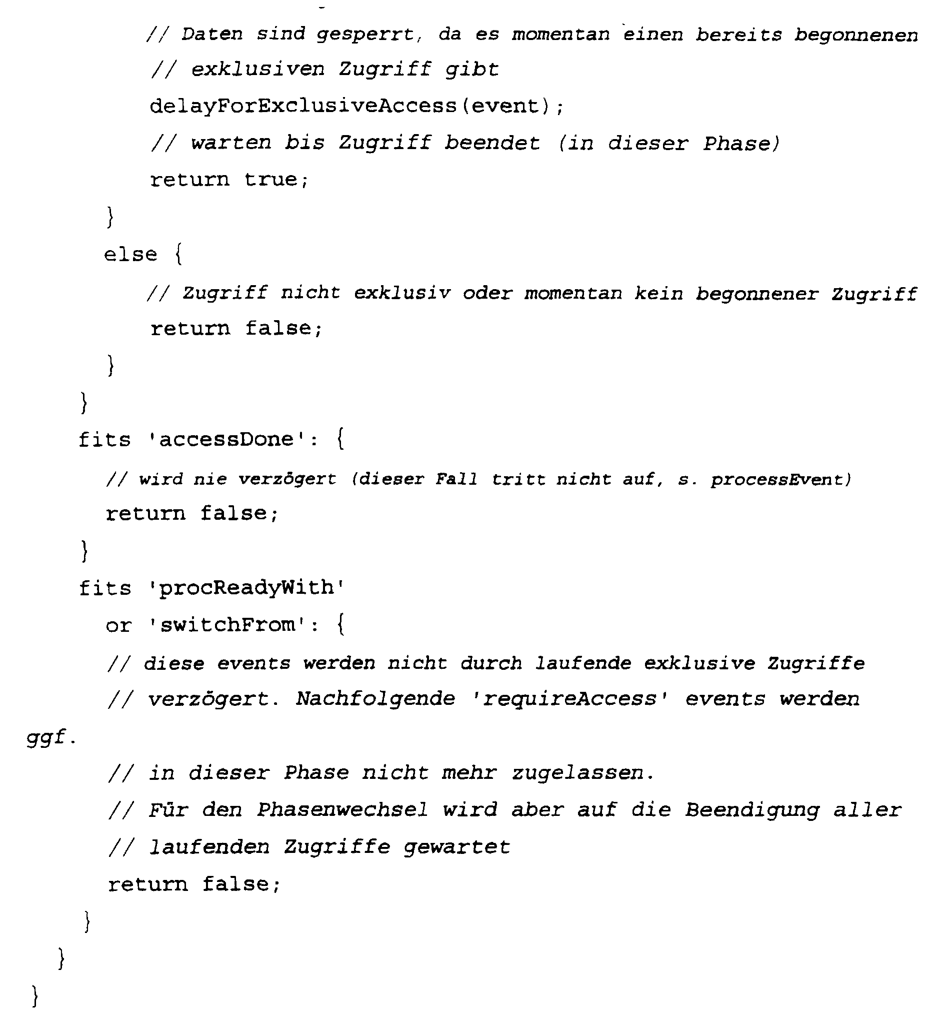

### 8.7 Architekturabhängige Implementierung von Koordinatorobjekten

Jede Implementierung muß zunächst die Kommunikation der auf das Koordinatorobjekt zugreifenden Prozesse mit dem Kontrollprogramm einschließlich der Blockierung der auf Antwort wartenden Prozesse realisieren. In Architekturen mit gemeinsamem Speicher wird dies typischerweise durch synchronisierte Zugriffe auf einen gemeinsamen Speicherbereich sowie den jeweils angebotenen Mitteln zur Prozeßkontrolle (locks, signals, etc.) geschehen, in Architekturen mit verteiltem Speicher durch Nachrichtenaustausch mit blockierenden Empfangsroutinen für die wartenden Prozesse.

In Architekturen mit verteiltem Speicher muß eine Koordinatorobjektimplementierung jedoch zusätzlich dafür sorgen, daß die Prozesse, sobald sie vom Kontrollprogramm die Erlaubnis erhalten haben, auf die Koordinatordaten zuzugreifen, jeweils eine konsistente Kopie dieser Daten in ihrem lokalen Speicher vorfinden. Diese Aufgabe wird in der obigen Semantik-Spezifikation durch Aufrufe der Funktion 'provideDataFor' ausgedrückt und beinhaltet den Austausch von Nachrichten, die neben internen Koordinator-Zustandsinformationen insbesondere den aktuellen Wert des für den Benutzer sichtbaren Datenobjekts enthalten. Damit gewährleistet eine Koordinatorobjekt - Implementierung eine automatische *Daten-Migration* zwischen den Prozessen.

Vor allem bei komplexen benutzerdefinierten Datentypen, welche Zeiger oder Referenzen auf andere Objekte beinhalten, muß die genaue Semantik einer solchen Migration beachtet werden:
- Welche der Komponenten eines strukturierten Datentyps werden beim Übertragen zu einem anderen Prozeß berücksichtigt?
- Interpretiert der Empfänger einer Nachricht diese Daten in einer Weise, die konsistent ist mit der Interpretation des Senders?
- Ist die Eigenschaft eines Objekts, daß zwei Teilkomponenten Zeiger oder Referenzen auf ein und dasselbe Objekt sind, auch nach einer Migration dieses Objekts erfüllt?

Die ersten beiden Punkte können i.A. nicht allein vom System entschieden werden, sondern es ist Benutzerunterstützung notwendig, um die Konvertierung von Benutzerdaten in das interne Austauschformat sowie die umgekehrte Konvertierung auf der Empfängerseite korrekt durchführen zu können. Dieser Vorgang wird häufig als *data marshalling* bezeichnet und muß vom System insoweit unterstützt werden, daß eine korrekte Konvertierung der Basis-Datentypen möglich ist. Die Konvertierung der Basis-Datentypen bildet dann die Grundlage für die Spezifikation von Konvertierungsroutinen für Benutzer-Datentypen. (Zum Thema *data marshalling* siehe u.a. [DCE])

Die im dritten Punkt angesprochene Eigenschaft wird auch als *intra-object sharing* bezeichnet und ist eine Eigenschaft, die allein durch die Koordinatorobjekt-Implementierung gewährleistet werden muß. Das *intra-object sharing* einschließlich der damit zusammenhängenden Implementierungsaspekte wird in [HeLi] diskutiert.

Die gesamte Verwaltung des Zustands der Koordinatorobjekte geschieht durch das System. Im verteilten Fall bedeutet dies, daß Koordinatorobjekt-Zustandsinformation zwischen unterschiedlichen Prozeßräumen konsistent gehalten wird. Die unabhängigen Prozesse verhalten sich immer so, als lägen die Koordinatorobjekte in einem (virtuellen) gemeinsamem Speicher; der Anwender sieht bis auf mögliche semantische Abweichungen aufgrund des (benutzerdefinierten!) *data marshalling* keinen Unterschied zwischen den beiden Modellen.

### Anhang A: Ein umfangreicheres Beispiel

Es wird ein Verfahren zur iterativen Lösung linearer Gleichungssysteme, das Konjugierte-Gradienten-Verfahren (cg-Verfahren) betrachtet. Das folgende C++ Programm implementiert das cg-Verfahren in einer naheliegender Weise sequentiell. Im Rumpf der Funktion wird ausgehend von einer Anfangsapproximation der Vektor *x* solange verändert, bis die Gleichung *A* * *x* = *b* (*A* und *b* vorgegeben) hinreichend genau gelöst ist. Die genutzten Operationen sind Vektor-Vektor-, Matrix-Vektor- und Vektor-Skalar-Operationen. Insbesondere Skalarprodukte werden häufig berechnet.

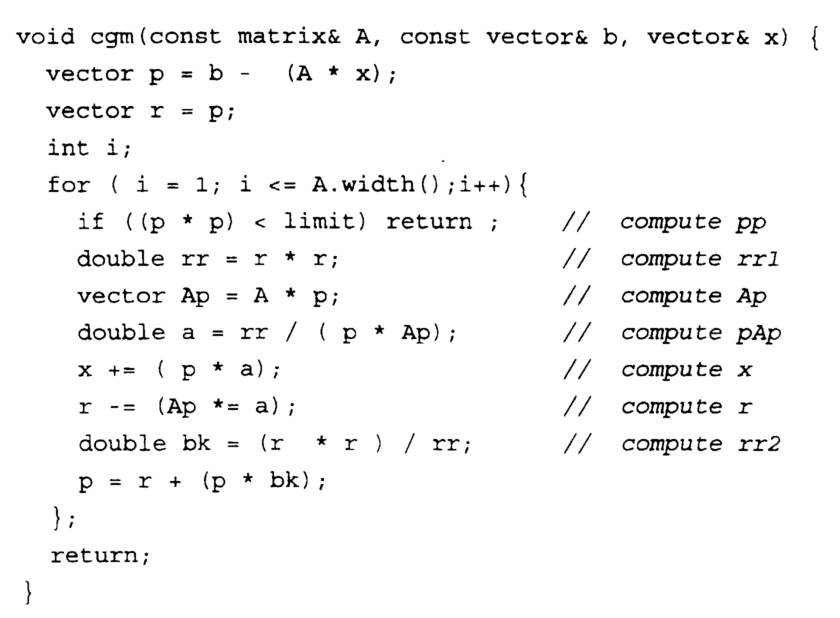

Diese Programm kann parallelisiert werden, indem die benötigten Vektoren und die Matrix (logisch) in Streifen geschnitten werden, die von unterschiedlichen Prozessen behandelt werden. Jeder der Prozesse führt die Funktion cgm auf einem eigenen Datenbereich aus. Einzelne Ergebnisse, insbesondere die Skalarprodukte, werden allerdings von allen Prozessen benötigt. Um darauf kontrolliert zugreifen zu können, sind diese als Koordinatorobjekte deklariert. Das gleiche gilt für den Vector fullP, der von allen Prozessen geschrieben und gelesen wird.

Die "Streifen" werden als Vektor-Sektionen und Matrix-Sektionen modelliert. Sektionen sind Verwaltungsstrukturen, die obere Grenze und untere Grenze eines Teilvektors oder einer Teilmatrix sowie den vollständigen Vektor und oder die vollständige Matrix selber enthalten.

Zum Verständnis des folgenden parallelen Algorithmus ist es sinnvoll, zunächst die Koordination zu ignorieren. Der Parallelisierungsgedanke (die parallelen Streifen bzw. Sektionen) sollte im Vordergrund stehen. Der oben angegebene sequentielle Algorithmus wird nur insofern verändert, als einige Operationen zweistufig werden: zuerst wird auf einem Streifen operiert, dann werden die Streifen gemeinschaftlich behandelt. (collectiveAdd) .

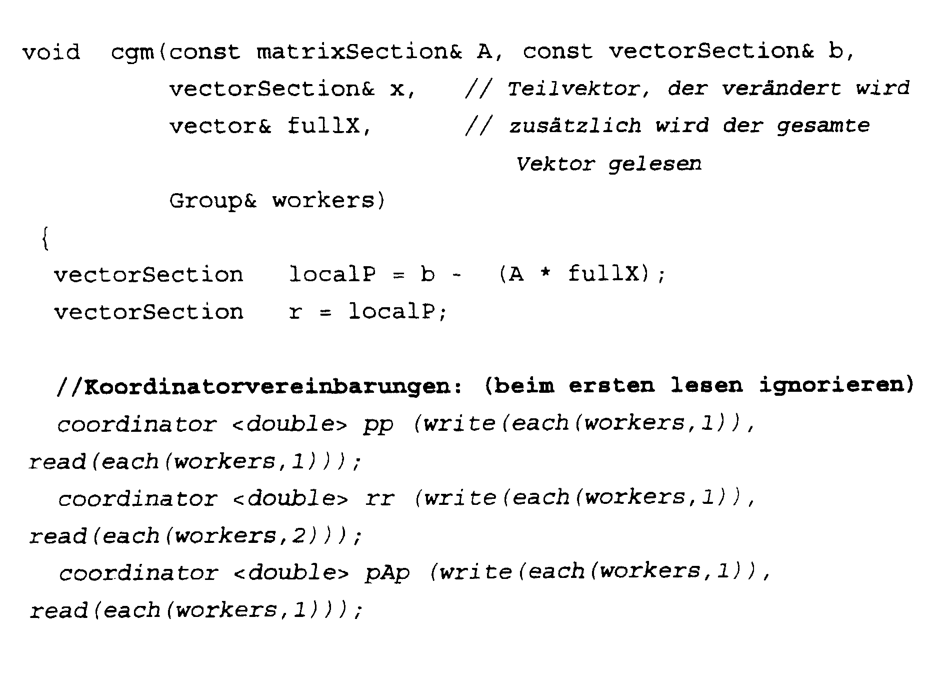

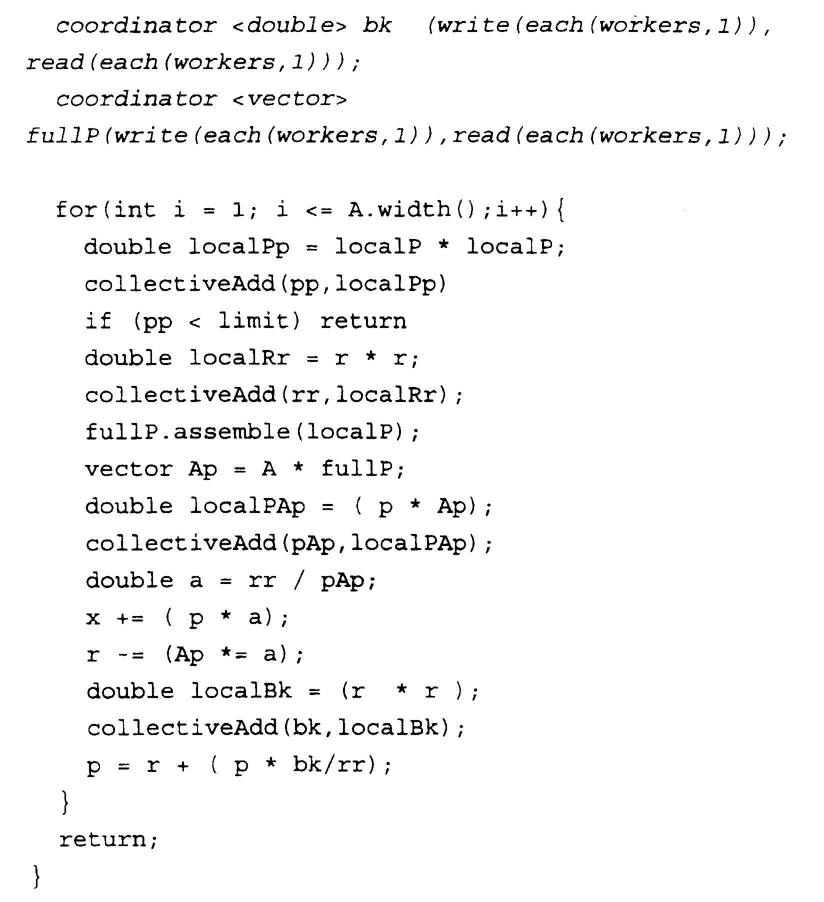

### Bemerkungen

- Die Methode 'assemble' kopiert Teilvektoren (die Sektionen localP) komponentenweise in den Zielvektor 'fullP'. Die Funktion *'collectiveAdd'* ist bereits beschrieben worden.
- Dieser Algorithmus setzt voraus, daß am Ende der Abarbeitung die Sektion *x* zurückgeschickt wird. Dies geschieht durch Programmiermodelle, wie z.B dem in [KnRe96b] beschriebenen Workpool aber auch in DCE[DCE] automatisch.
- Man beachte, daß *rr* zweimal pro Iteration gelesen wird. Dies spiegelt sich in der Koordinatordefinition.
Dieser Algorithmus enthält sehr viel Koordination. Solange man aber die Koordinatorobjekte ignoriert ist allerdings nicht viel davon sichtbar. Dies zeigt den Vorteil der Koordinatorobjekte: man kann parallele Algorithmen entwickleln und Koordination erst hinterher durch die Definition der richtigen Zugriffsmuster ablauf fähig machen. Der Softwareentwicklungsprozeß wird dadurch maßgeblich verbessert. Trotzdem sind die Programme dann auf beiden Architekturarten (gemeinsamer Speicher und verteilter Speicher) effizient lauffähig.

### Literaturverzeichnis

[BaStTa]
H. Bal , J. Steiner, A. Tanenbaum:
Programming Languages for Distributed Computing Systems ACM Computing Surveys, September 1989,

[BHJLC]
A. Black, N. Hutchinson, E. Jul, H. Levi, L. Carter Distribution and Abstract Types in Emerald
IEEE Transactions on Software Engineering SE 13,1, January 1987

[DCE]
Open Software Foundation:
DCE Application Development Guide

[HeLi]
M. Herlithy, B. Liskov:
A Value Transmission Method for Abstract Data Types,
ACM Transactions on Programming Languages and Systems 4, Oktober 1982

[mpi]
The MPI initiative
netlib@ornl.gov, 1994

[NiLo]
Bill Nitzberg ,Virginia Lo:
Distributed Shared Memory: A Survey of Issues and Algorithms IEEE COMPUTER, vol. 24, no. 8, Aug, 1991

### [PVM]

A. Geist , A. Beguelin , J. Dongarra , H. Jiang , R. Manchek ,V. Sunderam:
PVM 3.0 Users Guide and Reference Manual
Oak Ridge National Labarotory, 1993

[P4]
R. Butler, E. Lusk
Monitors, messages, and clusters: The p4 parallel programming system,
Parallel Computing 20, 1994

[SPLIT-C]
D. Culler
SPLIT C, //http.cs.berkeley.edu/~culler, 1996

## Patentansprüche

1. Verfahren zur Koordination des Ablaufs von miteinander kooperierenden Prozessen, die auf ein gemeinsames Objekt zugreifen,
• bei dem jedes gemeinsame Objekt als Koordinatorobjekt deklariert wird und ihm Zugriffsmuster zugeordnet werden, die Abfolgen von Zugriffen der kooperierenden Prozesse auf das Koordinatorobjekt festlegen,
• bei dem im Zugriffsmuster eine Abfolge der Arten von Zugriffen (Zugriffsarten) angegeben wird,
• bei dem das Koordinatorobjekt bei Ablauf der Prozesse feststellt, ob ein Zugriff auf das gemeinsame Objekt vorliegt und für diesen Fall an Hand des Zugriffsmusters ermittelt, ob der Zugriff ausgeführt werden kann oder zurückgestellt werden muß bis der Zugriff von einem anderen Prozeß beendet ist.

2. Verfahren nach Anspruch 1,
bei dem das Zugriffsmuster angibt, ob mehrere Zugriffe pro Zugriffart vor einem Zugriff einer anderen Zugriffsart bevorrechtigt behandelt werden.

3. Verfahren nach Anspruch 2,
bei dem die Zugriffe einer Zugriffsart strikt hintereinander ausgeführt werden, um Konflikte zu vermeiden.

4. Verfahren nach Anspruch 2,
bei dem dem Koordinatorobjekt mitteilbar ist, daß bei aufeinanderfolgender Bearbeitung der Zugriffe einer Zugriffsart keine Konfliktfälle auftreten, so daß die Zugriffe nicht strikt ausgeführt werden müssen.

5. Verfahren nach einem der Ansprüche 2-4,
bei dem die Anzahl der Zugriffe pro Zugriffsart mit einem Zähler gezählt werden und bei Erreichen der zulässigen Anzahl von Zugriffen pro Zugriffsart ein Zugriff eines anderen Prozesses oder einer anderen Zugriffsart gestattet wird.

6. Verfahren nach einem der vorhergehenden Ansprüche,
bei dem die eine Zugriffsart schreibende Zugriffe und die andere Zugriffsart lesende Zugriffe erfaßt.

7. Verfahren nach Anspruch 6,
bei dem das Koordinatorobjekt in den Schreibzustand oder in den Lesezustand übergehen kann und bei dem der Anfangszustand ein Schreibzustand ist.

8. Verfahren nach Anspruch 6 oder 7,
bei dem das Umschalten des Koordinatorobjekts von einem Zustand in den anderen Zustand durch eine Schaltbedingung veranlaßt wird, die durch ein Schlüsselwort einstellbar ist.

9. Verfahren nach Anspruch 8,
bei dem die Schaltbedingung derart einstellbar ist, daß eine Anzahl von Zugriffen einer Zugriffsart erfülltsein muß.

10. Verfahren nach Anspruch 8,
bei dem die Schaltbedingung derart einstellbar ist, daß eine Gesamtanzahl von Zugriffen von verschiedenen Prozessen erfüllt sein müssen.

11. Verfahren nach Anspruch 8,
bei dem die Schaltbedingung derart einstellbar ist, daß die Zugriffe einer Gruppe von Prozessen erfüllt sein müssen.

12. Verfahren nach einem der Ansprüche 8-11,
bei dem die Schaltbedingung durch den Prozeß festgestellt wird.

13. Verfahren nach einem der vorhergehenden Ansprüche,
bei dem das Koordinatorobjekt als zentrales Kontrollprogramm realisiert wird, das je nach Anwendungsfall spezifiziert wird.

14. Verfahren nach Anspruch 13,
bei dem das Kontrollprogramm noch nicht bearbeitbare Zugriffe in einer Wartemenge verwaltet.

15. Verfahren nach Anspruch 14,
bei dem im Kontrollprogramm für jede Zugriffsart eine Wartemenge erzeugt wird.

16. Verfahren nach einem der Ansprüche 14 oder 15,
bei dem dem der nächste zu bearbeitende Zugriff aus einer Wartemenge wählbar ist.

17. , Verfahren nach Anspruch 15 oder 16,
bei dem eine Warteschlange bevorrechtigt ist, so daß erst die Zugriffe dieser Warteschlange bearbeitet werden.

18. Verfahren nach einem der vorhergehenden Ansprüche,
bei dem jedem Prozeß ein lokaler Speicher zugeordnet wird, der von anderen Prozessen nicht adressierbar ist.

19. Verfahren nach Anspruch 18,
bei dem bei verteiltem Speicher das Kontrollprogramm dafür sorgt, daß für die Prozesse, denen der Zugriff erlaubt wird, in deren lokale Speicher mit den Koordinatordaten konsistente Daten abgespeichert werden.

## Claims

1. Method for coordination of the sequence of mutually interacting processes which act on a common object,
• in which each common object is declared as a coordinator object and access patterns are assigned to it which define sequences of accesses by the interacting processes to the coordinator object,
• in which a sequence of the types of accesses (access types) is defined in the access pattern,
• in which the coordinator object determines during the sequence of the processes whether access to the common object is taking place and, in this situation, uses the access pattern to determine whether the access can be carried out or must be rejected until the access by another process has ended.

2. Method according to Claim 1, in which the access pattern indicates whether multiple accesses per access type are dealt with with priority before access to another access type.

3. Method according to Claim 2, in which the accesses to an access type are carried out strictly successively, in order to avoid conflicts.

4. Method according to Claim 2, in which it is possible to report to the coordinator object that no conflict situations will occur if the accesses to an access type are processed successively, so that the accesses need not be carried out strictly.

5. Method according to one of Claims 2-4, in which the number of accesses per access type are counted by a counter and, when the maximum permissible number of accesses per access type is reached, an access to another process or to another access type is allowed.

6. Method according to one of the preceding claims, in which the one access type detects writing accesses, and the other access type detects reading accesses.

7. Method according to Claim 6, in which the coordinator object can change to the write state or to the read state, and in which the initial state is a write state.

8. Method according to Claim 6 or 7, in which the change of the coordinator object from one state to the other state is initiated by a switching condition which can be set by a keyword.

9. Method according to Claim 8, in which the switching condition can be set in such a manner that a number of accesses of one access type must be carried out.

10. Method according to Claim 8, in which the switching condition can be set in such a manner that a total number of accesses by different processes must be satisfied.

11. Method according to Claim 8, in which the switching condition can be set in such a manner that the accesses of a group of processes must be satisfied.

12. Method according to one of Claims 8-11, in which the switching condition is defined by the process.

13. Method according to one of the preceding claims, in which the coordinator object is a central control program which is specified as a function of the application.

14. Method according to Claim 13, in which the control program does not yet control accesses which can be processed in a waiting set.

15. Method according to Claim 14, in which a waiting set is produced in the control program for each access type.

16. Method according to one of Claims 14 or 15, in which the next access to be processed can be selected from a waiting set.

17. Method according to Claim 15 or 16, in which one queue is given priority, so that the accesses of this queue are processed first.

18. Method according to one of the preceding claims, in which each process is assigned a local memory, which cannot be addressed by other processes.

19. Method according to Claim 18, in which, if a distributive memory is used, the control program ensures that data consistent with the coordinator data are stored in the appropriate local memory for the processes to which the access is allowed.

## Revendications

1. Procédé pour la coordination du déroulement de processus coopérant mutuellement et ayant accès à un objet commun,
- dans lequel chaque objet commun est déclaré comme objet coordinateur et se voit attribuer des modèles d'accès qui fixent des séquences d'accès des processus coopérants à l'objet coordinateur,
- dans lequel une séquence des types d'accès est indiquée dans le modèle d'accès,
- dans lequel l'objet coordinateur vérifie lors du déroulement des processus si un accès à l'objet commun existe et détermine dans ce cas, à l'aide du modèle d'accès, si l'accès peut être réalisé ou doit être reporté jusqu'à
ce que l'accès d'un autre processus soit terminé.

2. Procédé selon la revendication 1, dans lequel le modèle d'accès indique si plusieurs accès par type d'accès sont traités prioritairement avant un accès d'un autre type d'accès.

3. Procédé selon la revendication 2, dans lequel les accès d'un type d'accès sont réalisés strictement l'un après l'autre pour éviter des conflits.

4. Procédé selon la revendication 2, dans lequel l'objet coordinateur peut être informé de l'absence de cas conflictuels lors du traitement successif des accès d'un type d'accès, de manière à ne pas avoir à réaliser les accès de manière stricte.

5. Procédé selon l'une des revendications 2 à 4, dans lequel le nombre d'accès par type d'accès est compté à l'aide d'un compteur et lorsque le nombre autorisé d'accès par type d'accès est atteint, un accès d'un autre processus ou d'un autre type d'accès est autorisé.

6. Procédé selon l'une des revendications précédentes, dans lequel l'un des types d'accès enregistre des accès en écriture et l'autre type d'accès des accès en lecture.

7. Procédé selon la revendication 6, dans lequel l'objet coordinateur peut passer à l'état d'écriture ou à l'état de lecture et dans lequel l'état initial est un état d'écriture.

8. Procédé selon la revendication 6 ou 7, dans lequel la commutation d'un état à l'autre de l'objet coordinateur est ordonnée par une condition de commutation qui peut être définie par un mot clé.

9. Procédé selon la revendication 8, dans lequel la condition de commutation peut être définie de façon telle qu'un nombre d'accès d'un type d'accès soit obligatoirement satisfait.

10. Procédé selon la revendication 8, dans lequel la condition de commutation peut être définie de façon telle qu'un nombre total d'accès de différents processus soit obligatoirement satisfait.

11. Procédé selon la revendication 8, dans lequel la condition de commutation peut être définie de façon telle que les accès d'un groupe de processus soit obligatoirement satisfaits.

12. Procédé selon l'une des revendications 8 à 11, dans lequel la condition de commutation est vérifiée par le processus.

13. Procédé selon l'une des revendications précédentes, dans lequel l'objet coordinateur est réalisé comme programme de contrôle central qui fait l'objet d'une spécification en fonction du cas d'application.

14. Procédé selon la revendication 13, dans lequel le programme de contrôle gère dans une quantité d'attente les accès ne pouvant pas encore être traités.

15. Procédé selon la revendication 14, dans lequel une quantité d'attente pour chaque type d'accès est créée dans le programme de contrôle.

16. Procédé selon l'une des revendications 14 ou 15, dans lequel le prochain accès à traiter peut être sélectionné dans une quantité d'attente.

17. Procédé selon la revendication 15 ou 16, dans lequel une file d'attente est prioritaire, de manière à traiter d'abord les accès de cette file d'attente.

18. Procédé selon l'une des revendications précédentes, dans lequel chaque processus se voit attribuer une mémoire locale ne pouvant pas être adressée par d'autres processus.

19. Procédé selon la revendication 18, dans lequel, en cas de mémoire répartie, le programme de contrôle veille à ce que pour les processus autorisés d'accès, soient enregistrées dans leurs mémoires locales des données en relation cohérente avec les données coordinatrices.
